# EUROPEAN PATENT APPLICATION

(11) **EP 4 823 180 A1**
(43) Date of publication of application: **14.10.2026**
(21) Application number: 25751705.2
(22) Date of filing: 08.02.2025
(51) Int. Cl.: H04W 36/00

(54) **CANDIDATE PRIMARY CELL CONFIGURATION INFORMATION PROCESSING METHOD, DEVICE, STORAGE MEDIUM, AND PRODUCT**

(30) Priority: 08.02.2024 CN 202410175842
(71) Applicant: Honor Device Co., Ltd., Shenzhen, Guangdong 518040 (CN)
(72) Inventor: LIU, Xu, Shenzhen, Guangdong 518040 (CN)
(74) Representative: MERH-IP Matias Erny Reichl Hoffmann Patentanwälte PartG mbB
(86) International application number: PCT/CN2025/076421
(87) International publication number: WO 2025/168095

(57) **Abstract**

Embodiments of this application provide a method and device for processing configuration information of a candidate primary cell, a storage medium, and a product, and relate to the field of communication technologies. The method includes: A terminal device receives first indication information sent by an original primary cell network device, where the first indication information indicates a processing policy for configuration information of a layer 1/2 triggered mobility LTM candidate primary cell when a CHO primary cell change occurs for the terminal device. The terminal device reserves or releases the configuration information of the LTM candidate primary cell based on the first indication information. Therefore, effective management of the configuration information of the LTM candidate primary cell is implemented.

## Description

This application claims priority to Chinese Patent Application No. 202410175842.4, filed with the China National Intellectual Property Administration on February 8, 2024 and entitled "METHOD AND DEVICE FOR PROCESSING CONFIGURATION INFORMATION OF CANDIDATE PRIMARY CELL, STORAGE MEDIUM, AND PRODUCT", which is incorporated herein by reference in its entirety.

### TECHNICAL FIELD

This application relates to the field of communication technologies, and in particular, to a method and device for processing configuration information of a candidate primary cell, a storage medium, and a product.

### BACKGROUND

With continuous development of communication technologies, cell handover mechanisms are continuously improved. For example, the cell handover mechanisms involve conditional handover (Conditional Handover, CHO) and layer 1/2 triggered mobility (Layer 1/2 triggered mobility, LTM). The foregoing two cell handover mechanisms are universal. For example, when a terminal device is in a single-connectivity state, the foregoing two cell handover mechanisms may be involved for cell handover. For another example, when a terminal device is in a dual-connectivity state, the foregoing two cell handover mechanisms may also be involved for handover of a primary cell. To support the foregoing two cell handover mechanisms, the terminal device needs to be configured with configuration information of an LTM candidate primary cell and configuration information of a CHO candidate primary cell. In this case, when a CHO primary cell change occurs, the configuration information of the LTM candidate primary cell of the terminal device needs to be effectively processed.

Therefore, currently, a solution for effectively processing configuration information of an LTM candidate primary cell is urgently needed, so that the configuration information of the LTM candidate primary cell can be released when it is unnecessary to reserve the configuration information of the LTM candidate primary cell, thereby reducing load of a terminal device; and the configuration information of the LTM candidate primary cell can be reserved when it is necessary to reserve the configuration information of the LTM candidate primary cell, thereby avoiding a waste of resources caused by repeated sending of the configuration information of the LTM candidate primary cell.

### SUMMARY

Embodiments of this application provide a method and device for processing configuration information of a candidate primary cell, a storage medium, and a product, applied to the field of communication technologies, to implement timely reservation or release of configuration information of an LTM candidate primary cell when a CHO primary cell change occurs.

According to a first aspect, an embodiment of this application provides a method for processing configuration information of a candidate primary cell. The method may be performed by a terminal device, or may be performed by a component (for example, a chip or a circuit) configured in the terminal device. This is not limited in this application.

For example, the method includes: receiving first indication information sent by an original primary cell network device, where the first indication information indicates a processing policy for configuration information of a layer 1/2 triggered mobility LTM candidate primary cell when a CHO primary cell change occurs for the terminal device; and reserving or releasing the configuration information of the LTM candidate primary cell based on the first indication information.

It should be understood that in the method for processing configuration information of a candidate primary cell provided in this embodiment of this application, the original primary cell network device indicates, by using the indication information, the processing policy for the configuration information of the LTM candidate primary cell, so that when determining to perform the CHO primary cell change, the terminal device may automatically reserve or release the configuration information of the LTM candidate primary cell according to the processing policy. Therefore, effective management of the configuration information of the LTM candidate primary cell is implemented.

In other words, if the terminal device always stores the configuration information of the LTM candidate primary cell, there may be a case in which the configuration information of the LTM candidate primary cell is still reserved when it is not necessary to reserve the configuration information of the LTM candidate primary cell, which brings heavy load to the terminal device. If the terminal device always releases the configuration information of the LTM candidate primary cell, there may be a case in which the configuration information of the LTM candidate primary cell is released when it is necessary to reserve the configuration information of the LTM candidate primary cell. As a result, the network device repeatedly sends the configuration information of the LTM candidate primary cell, causing a waste of resources. Therefore, in the technical solution provided in this application, the original primary cell network device indicates, by using the indication information, the processing policy for the configuration information of the LTM candidate primary cell. When determining to perform the CHO primary cell change, the terminal device may automatically reserve or release the configuration information of the LTM candidate primary cell according to the processing policy, instead of always storing the configuration information of the LTM candidate primary cell or always releasing the configuration information of the LTM candidate primary cell, so that the configuration information of the LTM candidate primary cell can be released when it is unnecessary to reserve the configuration information of the LTM candidate primary cell, thereby reducing load of the terminal device; and the configuration information of the LTM candidate primary cell can be reserved when it is necessary to reserve the configuration information of the LTM candidate primary cell, thereby avoiding a waste of resources caused by repeated sending of the configuration information of the LTM candidate primary cell.

With reference to the first aspect, in some implementations of the first aspect, the first indication information includes at least one of the following information:
(1) private indication information corresponding to configuration information of each CHO candidate primary cell for releasing or reserving the configuration information of the LTM candidate primary cell;
(2) common indication information corresponding to configuration information of at least one CHO candidate primary cell set for releasing or reserving the configuration information of the LTM candidate primary cell, where the configuration information of the CHO candidate primary cell set includes configuration information of at least one CHO candidate primary cell; and
(3) release occasion indication information, where the release occasion indication information indicates to release the configuration information of the LTM candidate primary cell after the CHO primary cell change is successfully completed.

It should be understood that the configuration information of each CHO candidate primary cell corresponds to one piece of private indication information. The private indication information is indication information on a per CHO candidate primary cell basis. Therefore, based on a manner in which each CHO candidate primary cell is associated with one piece of corresponding private indication information, and the private indication information is used for transmission, more refined management can be implemented on the configuration information of the LTM primary cell.

It should also be understood that configuration information of each CHO candidate primary cell set corresponds to one piece of common indication information. The common indication information is indication information on a per CHO candidate primary cell set basis. Therefore, based on a manner in which configuration information of one CHO candidate primary cell set is associated with one piece of corresponding common indication information, and the common indication information is used for transmission, the unified first indication information may be transmitted. When a larger quantity of CHO candidate primary cells is included in the configuration information of the CHO candidate primary cell set, a smaller quantity of pieces of common indication information needs to be transmitted, which can effectively save transmission resources.

It should also be understood that the release occasion indication information may be combined with first release indication information and/or second release indication information, so that a release occasion can be selective, and content of the first indication information can be selective.

In other words, the first indication information may include different content, and the first indication information corresponds to different processing policies when including different content, to improve flexibility of processing the configuration information of the LTM candidate primary cell.

It should also be understood that the "private indication information", the "common indication information", or the "release occasion indication information" is information that indicates to reserve or release the configuration information of the LTM candidate primary cell, for example, may be a field of "reservation", "release", or "release occasion", or may be a digit, a letter, or other information that represents "reservation", "release", or "release occasion". This is not limited in this application.

Optionally, each piece of private indication information is carried in configuration information of a corresponding CHO candidate primary cell.

It should be understood that each piece of private indication information corresponds to configuration information of one CHO candidate primary cell. Therefore, the original primary cell network device may carry each piece of private indication information in the configuration information of the corresponding CHO candidate primary cell, and carry configuration information of all CHO candidate primary cells that carries corresponding private indication information in RRC reconfiguration information. In this carrying manner, more refined management can be implemented on the configuration information of the LTM primary cell.

Optionally, there is a first mapping relationship between the configuration information of the first CHO candidate primary cell set and the common indication information for releasing the configuration information of the LTM candidate primary cell; and/or there is a second mapping relationship between configuration information of a second CHO candidate primary cell set and the common indication information for reserving the configuration information of the LTM candidate primary cell.

It should be understood that the first mapping relationship is an association relationship between the configuration information of the first CHO candidate primary cell set and the common indication information for releasing the configuration information of the LTM candidate primary cell; and the second mapping relationship is an association relationship between the configuration information of the second CHO candidate primary cell set and the common indication information for reserving the configuration information of the LTM candidate primary cell. The mapping relationship provides convenience for subsequently determining, by the terminal device, to reserve or release the configuration information of the LTM candidate primary cell.

In other words, when receiving the first indication information including the common indication information, the terminal device may determine, by using the common indication information and the mapping relationship, common indication information corresponding to configuration information of a set in which configuration information of a CHO target primary cell is located, and further determine to reserve or release the configuration information of the LTM candidate primary cell.

Optionally, the configuration information of the LTM candidate primary cell is reserved when a first condition is met, and the first condition includes at least one of the following conditions:
1. first indication information corresponding to configuration information of a CHO target primary cell is the private indication information for reserving the configuration information of the LTM candidate primary cell; and
2. first indication information that has a mapping relationship with configuration information of a set in which the configuration information of the CHO target primary cell is located is the common indication information for reserving the configuration information of the LTM candidate primary cell.

In other words, the first indication information may include the private indication information for reserving the configuration information of the LTM candidate primary cell, and may further include the common indication information for reserving the configuration information of the LTM candidate primary cell. The first indication information including any one of the foregoing information has a function of indicating the terminal device to reserve the configuration information of the LTM candidate primary cell. After receiving the first indication information and determining the CHO target primary cell, the terminal device may determine whether at least one first condition is met; and when determining that the at least one first condition is met, reserve the configuration information of the LTM candidate primary cell.

Therefore, the terminal device may reserve the configuration information of the LTM candidate primary cell according to the processing policy, to avoid that the terminal device repeatedly obtains the configuration information of the LTM candidate primary cell when the terminal device needs to perform LTM handover subsequently, thereby reducing signaling overheads. On this basis, when the "processing policy for the configuration information of the LTM candidate primary cell" is related to the CHO target primary cell, the first indication information corresponds to different reservation policies when including different content, to improve flexibility of reserving the configuration information of the LTM candidate primary cell.

It should be understood that for specific content included in the first indication information, for example, the private indication information for reserving the configuration information of the LTM candidate primary cell, or the common indication information for reserving the configuration information of the LTM candidate primary cell, a specific representation form thereof may be any identifier representing "reservation", for example, a digit, a field, or another form. This is not limited in this embodiment of this application.

Optionally, the method further includes: if the first indication information does not include the release occasion indication information, the configuration information of the LTM candidate primary cell is released when a second condition is met, and the second condition includes at least one of the following conditions:
1. the CHO primary cell change has been triggered and performed, and first indication information corresponding to configuration information of a CHO target primary cell is the private indication information for releasing the configuration information of the LTM candidate primary cell; and
2. the CHO primary cell change has been triggered and performed, and first indication information that has a mapping relationship with configuration information of a set in which the configuration information of the CHO target primary cell is located is the common indication information for releasing the configuration information of the LTM candidate primary cell.

In other words, the first indication information may include the private indication information for releasing the configuration information of the LTM candidate primary cell, and may further include the common indication information for releasing the configuration information of the LTM candidate primary cell. The first indication information including one of the foregoing information has a function of indicating the terminal device to release the configuration information of the LTM candidate primary cell. After receiving the first indication information and determining the CHO target primary cell, the terminal device may determine whether at least one second condition is met; and when determining that the at least one second condition is met, release the configuration information of the LTM candidate primary cell when the CHO primary cell change has been triggered and performed.

Therefore, when the "processing policy for the configuration information of the LTM candidate primary cell" is related to the CHO target primary cell, the first indication information corresponds to different release policies when including different content, to improve flexibility of releasing the configuration information of the LTM candidate primary cell.

It should be understood that for specific content included in the first indication information, for example, the private indication information for releasing the configuration information of the LTM candidate primary cell, or the common indication information for releasing the configuration information of the LTM candidate primary cell, a specific representation form thereof may be any identifier representing "release", for example, a digit, a field, or another form. This is not limited in this embodiment of this application.

Optionally, if the configuration information of the LTM candidate primary cell has been released when the CHO primary cell change fails to be performed and first indication information corresponding to a CHO candidate primary cell is to reserve the configuration information of the LTM candidate primary cell when cell reselection is performed, the method further includes: sending second indication information to a target primary cell network device, where the second indication information indicates that the configuration information of the LTM candidate primary cell has been released.

In other words, after the terminal device triggers and performs the CHO primary cell change, a result of performing the CHO primary cell change is success or failure. However, when the first indication information does not include the release occasion indication information, a condition for releasing the configuration information of the LTM candidate primary cell is that the CHO primary cell change has been triggered and performed, and is not related to the result of performing the CHO primary cell change. When it is determined that the CHO primary cell change fails to be performed, cell reselection may be performed and a reselected CHO target primary cell is accessed. Therefore, first indication information corresponding to two consecutive CHO primary cell changes may be inconsistent. For example, if the first indication information before reselection is to release the configuration information of the LTM candidate primary cell, first indication information corresponding to the reselected CHO candidate primary cell is to reserve the configuration information of the LTM candidate primary cell.

In this case, in this embodiment of this application, the second indication information indicates that the configuration information of the LTM candidate primary cell has been released may be sent to the target primary cell network device, so that the target primary cell network device determines whether to reconfigure the LTM candidate primary cell for the terminal device. If the LTM candidate primary cell is reconfigured for the terminal device, timeliness of subsequently receiving the configuration information of the LTM candidate primary cell by the terminal device can be improved. If it is determined that the LTM candidate primary cell does not need to be reconfigured for the terminal device, a waste of communication resources can be avoided.

It should be understood that a specific representation form of the "second indication information" may be a field representing "the terminal device has released the configuration information of the LTM candidate primary cell", or may be indication information such as an identifier, an index, or a number representing "released". This is not limited in this application.

Optionally, the method further includes: if the first indication information includes the release occasion indication information, the configuration information of the LTM candidate primary cell is released when a third condition is met, and the third condition includes at least one of the following conditions:
1. the CHO primary cell change has been successfully performed, and first indication information corresponding to configuration information of a CHO target primary cell is the private indication information for releasing the configuration information of the LTM candidate primary cell; and
2. the CHO primary cell change has been successfully performed, and first indication information that has a mapping relationship with configuration information of a set in which the configuration information of the CHO target primary cell is located is the common indication information for releasing the configuration information of the LTM candidate primary cell.

In other words, the first indication information may further include the release occasion indication information on a basis of including the private indication information for releasing the configuration information of the LTM candidate primary cell or the common indication information for releasing the configuration information of the LTM candidate primary cell. It should be understood that whether the first indication information includes the release occasion indication information provides different release occasions for a release operation. Specifically, when the first indication information does not include the release occasion indication information, it indicates that the configuration information of the LTM candidate primary cell is released when the CHO primary cell change is performed; or when the first indication information includes the release occasion indication information, it indicates that the configuration information of the LTM candidate primary cell is released when the CHO primary cell change has been successfully performed. Therefore, the terminal device may choose, based on different cases of whether the first indication information includes the release occasion indication information, to release the configuration information of the LTM candidate primary cell when the CHO primary cell change is performed; or release the configuration information of the LTM candidate primary cell when it is determined that the CHO primary cell change has been successfully performed, so that the release occasion is selective.

It should also be understood that the result of performing the CHO primary cell change by the terminal device includes two cases: success and failure. If the first indication information does not include the release occasion indication information, the terminal device releases the configuration information of the LTM candidate primary cell when the result of performing the CHO primary cell change is failure; and the terminal device performs cell reselection and re-accesses another CHO target primary cell. If first indication information corresponding to configuration information of the another CHO target primary cell is to reserve the configuration information of the LTM candidate primary cell, the release of the configuration information of the LTM candidate primary cell that the terminal device has performed before the cell reselection is valid. After the cell reselection, the configuration information of the LTM candidate primary cell is no longer reserved. If the first indication information includes the release occasion indication information, the terminal device does not release the configuration information of the LTM candidate primary cell when the result of performing the CHO primary cell change is failure; and the terminal device performs cell reselection and re-accesses another CHO target primary cell. If first indication information corresponding to configuration information of the another CHO target primary cell is to reserve the configuration information of the LTM candidate primary cell, the terminal device performs a reservation operation of the configuration information of the LTM candidate primary cell after the cell reselection. Therefore, whether the first indication information includes the release occasion indication information enables the processing policy to be selective.

With reference to the first aspect, in some implementations of the first aspect, the first indication information includes: indication information indicating that the terminal device autonomously reserves or releases the configuration information of the LTM candidate primary cell.

It should be understood that reserving or releasing the configuration information of the LTM candidate primary cell may be understood as a processing manner, information included in the first indication information is also different based on different devices controlling the processing manner, and specific solutions for reserving or releasing the configuration information of the LTM candidate primary cell based on the first indication information are also different.

In other words, the terminal device may also autonomously reserve or release the configuration information of the LTM candidate primary cell based on the first indication information sent by the original primary cell network device, so that the processing policy for the configuration information of the LTM candidate primary cell is more selective.

Optionally, after reserving or releasing the configuration information of the LTM candidate primary cell based on the first indication information, the method further includes: sending third indication information to a target primary cell network device, where the third indication information indicates that the terminal device has reserved or released the configuration information of the LTM candidate primary cell.

In other words, when the terminal device autonomously reserves or releases the configuration information of the LTM candidate primary cell, the original primary cell network device needs to learn of the foregoing autonomous processing result. Therefore, after autonomously reserving or releasing the configuration information of the LTM candidate primary cell, the terminal device sends, to the target primary cell network device, the third indication information indicate that the terminal device has reserved or released the configuration information of the LTM candidate primary cell, helping the target primary cell network device learn of the result of autonomously reserving or releasing the configuration information of the LTM candidate primary cell by the terminal device, to determine, in a subsequent LTM handover mechanism, whether to not repeatedly send the configuration information of the LTM candidate primary cell, to avoid a waste of communication resources; and also obtains the configuration information of the LTM candidate primary cell in time to meet a requirement of the subsequent LTM handover mechanism.

It should be understood that a specific representation form of the "third indication information" may be a field representing "the terminal device has reserved or released the configuration information of the LTM candidate primary cell", or may be indication information such as an identifier, an index, or a number representing "reserved or released". This is not limited in this application.

With reference to the first aspect, in some implementations of the first aspect, the first indication information further includes: fourth indication information, and the fourth indication information indicates to reserve or release the first indication information.

It should be understood that a specific representation form of the "fourth indication information" may be a field representing "reserving or releasing the first indication information", or may be indication information such as an identifier, an index, or a number representing "reserving or releasing the first indication information". This is not limited in this application.

Optionally, after reserving or releasing the configuration information of the LTM candidate primary cell based on the first indication information, the method further includes any one of the following:
if the fourth indication information indicates to reserve the first indication information, reserving the first indication information, to reserve or release, based on the first indication information, the configuration information of the LTM candidate primary cell that is reconfigured by the original primary cell network device; or
if the fourth indication information indicates to release the first indication information, releasing the first indication information, and re-receiving the first indication information sent by the original primary cell network device, to reserve or release, based on the re-received first indication information, the configuration information of the LTM candidate primary cell that is reconfigured by the original primary cell network device.

In other words, the first indication information can not only indicate the processing policy for the configuration information of the LTM candidate primary cell, but also indicate whether the configuration information of the LTM candidate primary cell subsequently reconfigured by the original primary cell network device can be processed according to the processing policy. When the fourth indication information indicates to reserve the first indication information, a waste of communication resources caused by subsequent continuous sending of the first indication information by the original primary cell network device can be avoided. When the fourth indication information indicates to release the first indication information, the processing policy can be adjusted in a manner of subsequently resending the first indication information by the original primary cell network device, to properly process the configuration information of the LTM candidate primary cell.

With reference to the first aspect, in some implementations of the first aspect, the first indication information is carried in radio resource control (Radio Resource Control, RRC) reconfiguration information or carried in dedicated signaling.

It should be understood that in this embodiment of this application, the indication information is carried in the radio resource control RRC reconfiguration information, thereby reducing signaling overheads and effectively avoiding a waste of communication resources; or the indication information is carried in the dedicated signaling, so that a speed of parsing the indication information can be improved.

According to a second aspect, an embodiment of this application provides a method for processing configuration information of a candidate primary cell. The method may be performed by an original primary cell network device, or may be performed by a component (for example, a chip or a circuit) configured in the original primary cell network device. This is not limited in this application.

For example, the method includes: sending first indication information to a terminal device, where the first indication information indicates a processing policy for configuration information of an LTM candidate primary cell when a CHO primary cell change occurs for the terminal device.

In other words, how the terminal device reserves or releases the configuration information of the LTM candidate primary cell needs to be triggered by the original primary cell network device. Therefore, based on the first indication information sent by the original primary cell network device to the terminal device, it may be ensured that the terminal device obtains the processing policy for the configuration information of the LTM candidate primary cell when the CHO primary cell change occurs for the terminal device, so that when determining to perform the CHO primary cell change, the terminal device may automatically reserve or release the configuration information of the LTM candidate primary cell according to the processing policy. Therefore, effective management of the configuration information of the LTM candidate primary cell is implemented.

With reference to the second aspect, in some implementations of the second aspect, the first indication information includes at least one of the following information:
(1) private indication information corresponding to configuration information of each CHO candidate primary cell for releasing or reserving the configuration information of the LTM candidate primary cell;
(2) common indication information corresponding to configuration information of at least one CHO candidate primary cell set for releasing or reserving the configuration information of the LTM candidate primary cell, where the configuration information of the CHO candidate primary cell set includes configuration information of at least one CHO candidate primary cell; and
(3) release occasion indication information, where the release occasion indication information indicates to release the configuration information of the LTM candidate primary cell after the CHO primary cell change is successfully completed.

It should be understood that in the second aspect, explanations of each piece of information included in the first indication information are consistent with explanations of each piece of information included in the first indication information in the first aspect. Details are not described herein again.

It should be noted that the first indication information may include different content, and the first indication information corresponds to different processing policies when including different content, to improve flexibility of processing the configuration information of the LTM candidate primary cell.

With reference to the second aspect, in some implementations of the second aspect, each piece of private indication information is carried in configuration information of a corresponding CHO candidate primary cell.

It should be understood that each piece of private indication information corresponds to configuration information of one CHO candidate primary cell. Therefore, the original primary cell network device may carry each piece of private indication information in the configuration information of the corresponding CHO candidate primary cell, and carry configuration information of all CHO candidate primary cells that carries corresponding private indication information in RRC reconfiguration information. In this carrying manner, more refined management can be implemented on the configuration information of the LTM primary cell..

With reference to the second aspect, in some implementations of the second aspect, there is a first mapping relationship between the configuration information of the first CHO candidate primary cell set and the common indication information for releasing the configuration information of the LTM candidate primary cell; and/or there is a second mapping relationship between configuration information of a second CHO candidate primary cell set and the common indication information for reserving the configuration information of the LTM candidate primary cell.

It should be understood that in the second aspect, explanations of the first mapping relationship and the second mapping relationship are consistent with explanations of the first mapping relationship and the second mapping relationship in the first aspect. Details are not described herein again.

In other words, when receiving the first indication information including the common indication information, the terminal device may determine, by using the common indication information and the mapping relationship, common indication information corresponding to configuration information of a set in which configuration information of a CHO target primary cell is located, and further determine to reserve or release the configuration information of the LTM candidate primary cell.

With reference to the second aspect, in some implementations of the second aspect, the first indication information includes: indication information indicating that the terminal device autonomously reserves or releases the configuration information of the LTM candidate primary cell.

It should be understood that reserving or releasing the configuration information of the LTM candidate primary cell may be understood as a processing manner, information included in the first indication information is also different based on different devices controlling the processing manner, and specific solutions for reserving or releasing the configuration information of the LTM candidate primary cell based on the first indication information are also different.

In other words, the terminal device may also autonomously reserve or release the configuration information of the LTM candidate primary cell based on the first indication information sent by the original primary cell network device, so that the processing policy for the configuration information of the LTM candidate primary cell is more selective.

With reference to the second aspect, in some implementations of the second aspect, the first indication information further includes: fourth indication information, and the fourth indication information indicates to reserve or release the first indication information.

In other words, the first indication information can not only indicate the processing policy for the configuration information of the LTM candidate primary cell, but also indicate whether the configuration information of the LTM candidate primary cell subsequently reconfigured by the original primary cell network device can be processed according to the processing policy. Therefore, whether the processing policy can be continuously used as a basis for subsequent processing is selective.

It should be understood that a specific representation form of the "fourth indication information" may be a field representing "reserving or releasing the first indication information", or may be indication information such as an identifier, an index, or a number representing "reserving or releasing the first indication information". This is not limited in this application.

With reference to the second aspect, in some implementations of the second aspect, the first indication information is carried in radio resource control RRC reconfiguration information or carried in dedicated signaling.

It should be understood that in this embodiment of this application, the indication information is carried in the radio resource control RRC reconfiguration information, thereby reducing signaling overheads and effectively avoiding a waste of communication resources; or the indication information is carried in the dedicated signaling, so that a speed of parsing the indication information can be improved.

According to a third aspect, an embodiment of this application provides an apparatus for processing configuration information of a candidate primary cell. The apparatus includes modules or units configured to perform the method according to any one of the first aspect and the possible implementations of the first aspect.

According to a fourth aspect, an apparatus for processing configuration information of a candidate primary cell is provided. The apparatus includes modules or units configured to perform the method according to any one of the second aspect and the possible implementations of the second aspect.

According to a fifth aspect, an apparatus for processing configuration information of a candidate primary cell is provided. The apparatus includes a processor. The processor is coupled to a memory, and may be configured to execute instructions in the memory, to implement the method according to any one of the first aspect and the possible implementations of the first aspect. Optionally, the apparatus further includes the memory. Optionally, the apparatus further includes a communication interface. The processor is coupled to the communication interface.

In an implementation, the apparatus for processing configuration information of a candidate primary cell is a terminal device. When the apparatus for processing configuration information of a candidate primary cell is the terminal device, the communication interface may be a transceiver or an input/output interface.

In another implementation, the apparatus for processing configuration information of a candidate primary cell is a chip configured in a terminal device. When the apparatus for processing configuration information of a candidate primary cell is the chip configured in the terminal device, the communication interface may be an input/output interface.

Optionally, the transceiver may be a transceiver circuit. Optionally, the input/output interface may be an input/output circuit.

According to a sixth aspect, an apparatus for processing configuration information of a candidate primary cell is provided. The apparatus includes a processor. The processor is coupled to a memory, and may be configured to execute instructions in the memory, to implement the method according to any one of the second aspect and the possible implementations of the second aspect. Optionally, the apparatus further includes the memory. Optionally, the apparatus further includes a communication interface. The processor is coupled to the communication interface.

In an implementation, the apparatus for processing configuration information of a candidate primary cell is an original primary cell network device. When the apparatus for processing configuration information of a candidate primary cell is the original primary cell network device, the communication interface may be a transceiver or an input/output interface.

In another implementation, the apparatus for processing configuration information of a candidate primary cell is a chip configured in an original primary cell network device. When the apparatus for processing configuration information of a candidate primary cell is the chip configured in the original primary cell network device, the communication interface may be an input/output interface.

Optionally, the transceiver may be a transceiver circuit. Optionally, the input/output interface may be an input/output circuit.

According to a seventh aspect, a processor is provided. The processor includes an input circuit, an output circuit, and a processing circuit. The processing circuit is configured to: receive a signal by using the input circuit, and transmit a signal by using the output circuit, so that the processor performs the method according to any one of the first aspect and the second aspect and the possible implementations of the first aspect and the second aspect.

In a specific implementation process, the processor may be one or more chips, the input circuit may be an input pin, the output circuit may be an output pin, and the processing circuit may be a transistor, a gate circuit, a trigger, various logic circuits, and the like. An input signal received by the input circuit may be received and input by, for example, a receiver, a signal output by the output circuit may be output to, for example, a transmitter and transmitted by the transmitter, and the input circuit and the output circuit may be a same circuit, where the circuit is separately used as the input circuit and the output circuit at different moments. Specific implementations of the processor and various circuits are not limited in this embodiment of this application.

According to an eighth aspect, a processing apparatus is provided. The apparatus includes a processor and a memory. The processor is configured to: read instructions stored in the memory, receive a signal through a receiver, and transmit a signal through a transmitter, to perform the method according to any one of the first aspect and the second aspect and the possible implementations of the first aspect and the second aspect.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, for example, a read-only memory (read only memory, ROM). The memory and the processor may be integrated on a same chip, or may be respectively disposed on different chips. A type of the memory and a manner of disposing the memory and the processor are not limited in this embodiment of this application.

It should be understood that for a related data exchange process, for example, sending indication information may be a process of outputting indication information from the processor, and receiving capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the eighth aspect may be one or more chips. The processor in the processing apparatus may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a ninth aspect, an embodiment of this application provides a terminal device. The terminal device includes a processor, a memory, and a transceiver. The memory is configured to store computer-executable instructions, the transceiver is configured to send and receive data, and the processor is configured to execute the computer-executable instructions stored in the memory. When executing the computer-executable instructions stored in the memory, the processor is configured to indicate the terminal device to perform the method according to any one of the first aspect and the possible implementations of the first aspect.

According to a tenth aspect, an embodiment of this application provides an original primary cell network device. The original primary cell network device includes a processor, a memory, and a transceiver. The memory is configured to store computer-executable instructions, the transceiver is configured to send and receive data, and the processor is configured to run the computer-executable instructions. When executing the computer-executable instructions stored in the memory, the processor is configured to indicate the original primary cell network device to perform the method according to any one of the second aspect and the possible implementations of the second aspect.

According to an eleventh aspect, an embodiment of this application provides a computer-readable storage medium. The computer-readable storage medium stores a computer program or instructions; and when the computer program or the instructions are run on a computer, the computer is enabled to perform the method according to any one of the first aspect and the second aspect and the possible implementations of the first aspect and the second aspect.

According to a twelfth aspect, this application provides a chip or a chip system. The chip or the chip system includes at least one processor and a communication interface. The communication interface and the at least one processor are interconnected through a line. The at least one processor is configured to run a computer program or instructions, to perform the method according to any one of the first aspect and the possible implementations of the first aspect. The communication interface in the chip may be an input/output interface, a pin, a circuit, or the like.

According to a thirteenth aspect, an embodiment of this application provides a computer program product including a computer program. When the computer program is run on a computer, the computer is enabled to perform the method according to any one of the first aspect and the second aspect and the possible implementations of the first aspect and the second aspect.

In a possible implementation, the chip or the chip system described in this application further includes at least one memory, and the at least one memory stores instructions. The memory may be a storage unit, for example, a register or a cache, inside the chip, or may be a storage unit (for example, a read-only memory or a random access memory) of the chip.

It should be understood that the technical solutions of the third aspect, the fifth aspect, and the ninth aspect of this application correspond to the technical solutions of the first aspect of this application, the technical solutions of the fourth aspect, the sixth aspect, and the tenth aspect of this application correspond to the technical solutions of the second aspect of this application, and the technical solutions of the seventh aspect, the eighth aspect, and the eleventh aspect to the thirteenth aspect of this application correspond to the technical solutions of the first aspect and the second aspect of this application. Beneficial effect achieved in the aspects and corresponding feasible implementations is similar. Details are not described again.

### BRIEF DESCRIPTION OF DRAWINGS

FIG. 1 is a diagram of an architecture of a communication system 100 to which embodiments of this application are applied;
FIG. 2 is an example diagram of signaling exchange between a terminal device and each network device in a CHO procedure 200;
FIG. 3 is an example diagram of signaling exchange between a terminal device and each network device in an LTM procedure 300;
FIG. 4 is a schematic flowchart of a method 400 for processing configuration information of a candidate primary cell according to an embodiment of this application from a perspective of device interaction;
FIG. 5A and FIG. 5B are a diagram of signaling exchange between a terminal device and each network device when a CHO primary cell change occurs and a decision is made by an original primary cell network device in a method 500 for processing configuration information of a candidate primary cell according to an embodiment of this application from a perspective of device interaction;
FIG. 6A and FIG. 6B are a diagram of signaling exchange between a terminal device and each network device when a CHO primary cell change occurs and a decision is made by a terminal device in a method 600 for processing configuration information of a candidate primary cell according to an embodiment of this application from a perspective of device interaction;
FIG. 7 is a block diagram of an apparatus 7000 for processing configuration information of a candidate primary cell according to an embodiment of this application;
FIG. 8 is a diagram of a possible structure of a terminal device 8000 according to an embodiment of this application; and
FIG. 9 is a diagram of a possible structure of an original primary cell network device according to an embodiment of this application, for example, may be a diagram of a structure of a base station 9000.

### DESCRIPTION OF EMBODIMENTS

To facilitate understanding of a method and device for processing configuration information of a candidate primary cell, a storage medium, and a product provided in embodiments of this application, the following describes the method for processing configuration information of a candidate primary cell provided in embodiments of this application, a system architecture, and an application scenario thereof. It may be understood that the system architecture and the application scenario described in embodiments of this application are intended to describe the technical solutions in embodiments of this application more clearly, and do not constitute any limitation on the technical solutions provided in embodiments of this application.

The technical solutions in embodiments of this application may be applied to a communication scenarios that may be applied to various communication systems, for example: a long term evolution (Long Term Evolution, LTE) system; an LTE frequency division duplex (Frequency Division Duplex, FDD) system; an LTE time division duplex (Time Division Duplex, TDD) system; a universal mobile telecommunications system (Universal Mobile Telecommunication System, UMTS); a worldwide interoperability for microwave access (Worldwide Interoperability for Microwave Access, WiMAX) communication system; a 5th generation (5th Generation, 5G) communication system or a new radio access technology (new radio Access Technology, NR); vehicle-to-X (vehicle-to-X, V2X), where V2X may include vehicle-to-internet (vehicle to network, V2N), vehicle to-vehicle (vehicle to-vehicle, V2V), vehicle to infrastructure (vehicle to infrastructure, V2I), vehicle to pedestrian (vehicle to pedestrian, V2P), and the like; and long term evolution-vehicle (Long Term Evolution-Vehicle, LTE-V); internet of vehicles; machine type communication (machine type communication, MTC); internet of things (Internet of Things, IoT); long term evolution-machine (Long Term Evolution-Machine, LTE-M); and machine to machine (Machine to Machine, M2M).

Further, this application may be applied to a plurality of specific communication scenarios, for example, a scenario of point-to-point transmission between a base station and a terminal or between terminals, multi-hop transmission between a base station and a terminal, or dual-connectivity (dual-connectivity, DC) or multi-connectivity between a plurality of base stations and a terminal. It should be noted that the foregoing specific communication application scenario is merely an example, and this is not limited. Specifically, the method may be applied to a scenario in which LTM handover and CHO coexist in the foregoing specific communication scenario.

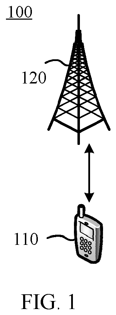

For ease of understanding embodiments of this application, a communication system to which embodiments of this application are applied is first described in detail with reference to FIG. 1. FIG. 1 is a diagram of an architecture of a communication system 100 to which embodiments of this application are applied. As shown in FIG. 1, the communication system 100 may further include at least one terminal device, for example, a terminal device 110 shown in FIG. 1. The communication system 100 may further include at least one primary cell network device, for example, an original primary cell network device 120 shown in FIG. 1. The terminal device 110 may be mobile or fixed. The original primary cell network device 120 is a device that can communicate with the terminal device 110 through a radio link, for example, a base station or a base station controller. The original primary cell network device 120 may provide communication coverage for a particular geographic area, and may communicate with a terminal device located in the coverage area (cell).

FIG. 1 shows an example of one terminal device and one primary cell network device. Optionally, when the terminal device is in a single-connectivity state, the communication system 100 may include at least one primary cell network device, and the primary cell network device may be understood as a cell network device. Optionally, when the terminal device is in a dual-connectivity state, the communication system 100 may include at least one primary cell network device, and may further include at least one primary secondary cell network device. In addition, coverage areas of the primary cell network device and the primary secondary cell network device may include another quantity of terminal device. This is not limited in this embodiment of this application.

A plurality of antennas may be configured for the foregoing communication devices, for example, the terminal device 110 and the original primary cell network device 120 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that each communication device may include a plurality of components (for example, a processor, a modulator, a multiplexer, a demodulator, a demultiplexer, or an antenna) related to signal sending and receiving. Therefore, the primary cell network device may communicate with the terminal device by using a multi-antenna technology.

Optionally, the wireless communication system 100 may further include other network entities such as a network controller or a mobility management entity. This is not limited in embodiments of this application.

In embodiments of this application, the network device may be any device having a wireless transceiver function. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, Home evolved NodeB, or Home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission point, TP), a transmission reception point (transmission and reception point, TRP), or the like. Alternatively, the device may be a next generation NodeB (the next Generation NodeB, gNB) or a transmission point (TRP or TP) in a 5G system, for example, an NR system, may be one antenna panel or a group of antenna panels (including a plurality of antenna panels) of a base station in the 5G system, or may be a network node, for example, a baseband unit (BBU) or a distributed unit (distributed unit, DU), included in a gNB or a transmission point.

In some deployments, the gNB may include a central unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of radio resource control (radio resource control, RRC) and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher layer signaling such as RRC layer signaling may also be considered as being sent by the DU or sent by the DU and the AAU. It may be understood that the primary cell network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells are featured by a small coverage area and low transmit power, and are applicable to providing a high-rate data transmission service.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. In embodiments of this application, the terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that is directly worn on a human body or integrated into clothing or an accessory of a user. The wearable device is not merely a hardware device, but also implements powerful functions through software support, data exchange, and cloud interaction. In a broad sense, wearable intelligent devices include full-featured and large-sized devices that can implement complete or partial functions without depending on smartphones, for example, smart watches or smart glasses, and devices that focus on only one type of application function and need to operate with other devices such as smartphones, for example, various smart bands or smart jewelry for monitoring physical signs.

In addition, the terminal device may alternatively be a terminal device in an internet of things (internet of things, IoT) system. The IoT is an important part of development of information technologies in the future. A main technical feature of the IoT is that an object is connected to a network by using a communication technology, to implement an intelligent network for human-machine interconnection and thing-thing interconnection.

A specific form of the terminal device is not limited in this application.

To clearly describe technical solutions in embodiments of this application, the following briefly describes some terms and technologies in the embodiments of this application.
1. A CHO primary cell change is a process in which a terminal device triggers handover from a current CHO primary cell to a specific CHO candidate primary cell due to a change in service conditions or channel quality. The process of handover from the current CHO primary cell to the specific CHO candidate primary cell may be a CHO procedure for short.

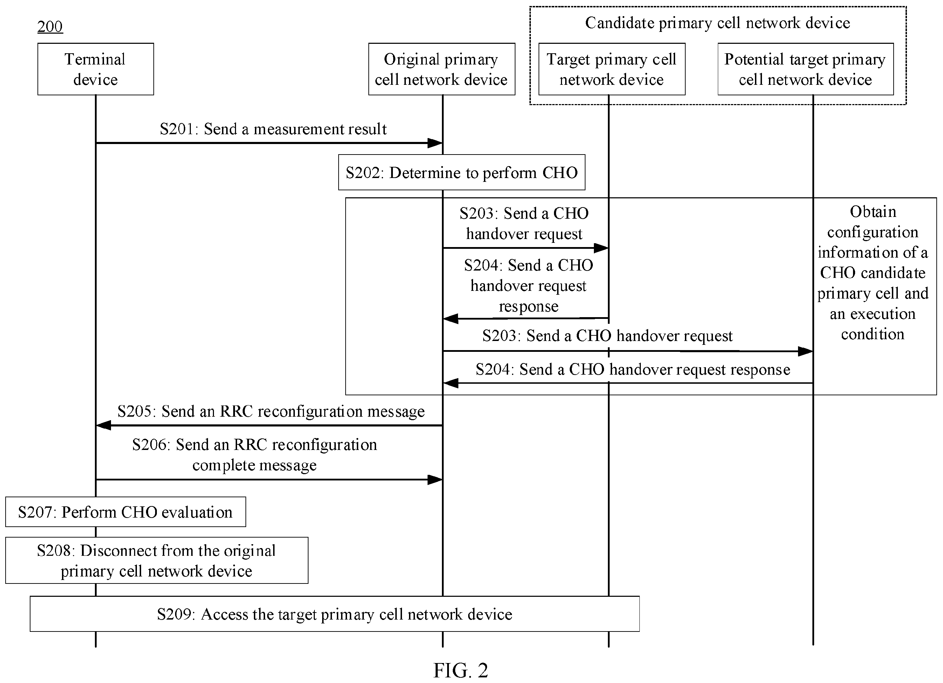

FIG. 2 is an example diagram of signaling exchange between a terminal device and each network device in a CHO procedure 200. With reference to FIG. 2, the following briefly describes the CHO procedure 200. The CHO procedure 200 may specifically include S201 to S209 below.

S201: A terminal device sends a measurement result to an original primary cell network device.

S202: The original primary cell network device determines to perform CHO.

The original primary cell network device determines, based on the measurement result, whether to perform CHO.

S203: The original primary cell network device sends a CHO handover request to a candidate primary cell network device.

A candidate primary cell includes a target primary cell and a potential target primary cell.

S204: The candidate primary cell network device sends a CHO handover request response to the original primary cell network device.

In S204, the original primary cell network device obtains configuration information of a CHO candidate primary cell and an execution condition.

It should be understood that when the terminal device is in a dual-connectivity state, a primary cell is a cell different from a primary secondary cell. Therefore, the configuration information of the CHO candidate primary cell is configuration information of a CHO candidate primary cell. It should also be understood that when the terminal device is in a single-connectivity state, concepts of the primary cell and the cell are the same. Therefore, the CHO candidate primary cell is a CHO candidate cell, and the configuration information of the CHO candidate primary cell is configuration information of the CHO candidate cell; and correspondingly the original primary cell network device is an original cell network device, and the candidate primary cell network device is a candidate cell network device. Subsequently, the target primary cell to be determined is a target cell, and a target primary cell network device is a target cell network device.

It should also be understood that the execution condition is a CHO execution condition, and the CHO execution condition may be any one of an event A3, an event A4, and an event A5; or may be any two of an event A3, an event A4, and an event A5; or may be an event A3, an event A4, or an event A5. The event A3 indicates that quality of a neighboring cell is better than that of an original cell. Occurrence of this event triggers handover. The event A4 indicates that quality of a neighboring cell is greater than an absolute threshold. Occurrence of this event triggers handover. The event A5 indicates that quality of an original cell is less than an absolute threshold and quality of a neighboring cell is greater than an absolute threshold. Occurrence of this event triggers handover.

S205: The original primary cell network device sends an RRC reconfiguration message to the terminal device.

In S205, the configuration information of the CHO candidate primary cell and the execution condition are sent to the terminal device.

S206: The terminal device sends an RRC reconfiguration complete message to the original primary cell network device.

S207: The terminal device performs CHO evaluation.

It should be understood that the terminal device performs CHO evaluation based on the configuration information of the CHO candidate primary cell and the execution condition, to determine the target primary cell.

S208: The terminal device disconnects from the original primary cell network device.

S209: The terminal device accesses the target primary cell network device.

At this point, the CHO procedure is complete.

2. Layer 1/2 triggered mobility: To be specific, the LTM is a process in which the original primary cell network device performs, when the terminal device is in a connected state, cell handover on the terminal device based on an L1 measurement result reported by the terminal device and a capability of the terminal device to support the LTM.

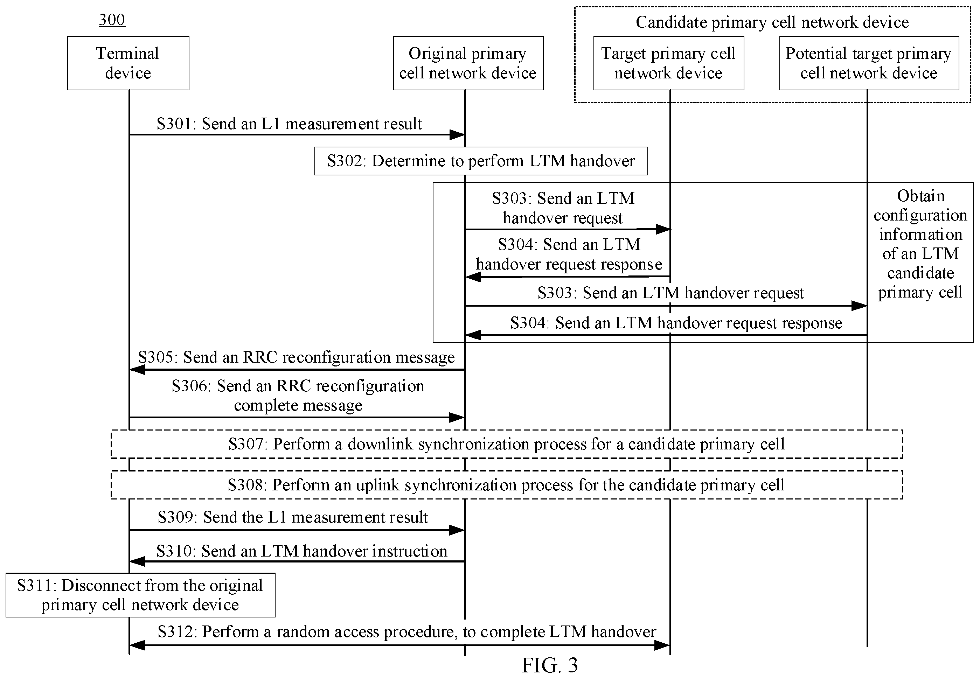

FIG. 3 is an example diagram of signaling exchange between a terminal device and each network device in an LTM procedure 300. With reference to FIG. 3, the following briefly describes the LTM procedure 300. The LTM procedure 300 may specifically include S301 to S312 below.

S301: A terminal device sends an L1 measurement result to an original primary cell network device.

S302: The original primary cell network device determines to perform LTM handover.

S303: The original primary cell network device sends an LTM handover request to a candidate primary cell network device.

A candidate primary cell includes a target primary cell and a potential target primary cell.

S304: The candidate primary cell network device sends an LTM handover request response to the original primary cell network device.

In S304, the original primary cell network device obtains configuration information of an LTM candidate primary cell. It should be understood that when the terminal device is in a dual-connectivity state, a primary cell is a cell different from a primary secondary cell. Therefore, the configuration information of the LTM candidate primary cell is configuration information of an LTM candidate primary cell. It should also be understood that when the terminal device is in a single-connectivity state, concepts of the primary cell and the cell are the same. Therefore, the LTM candidate primary cell is an LTM candidate cell, and the configuration information of the LTM candidate primary cell is configuration information of the LTM candidate cell; and correspondingly the original primary cell network device is an original cell network device, and the candidate primary cell network device is a candidate cell network device. Subsequently, the target primary cell to be determined is a target cell, and a target primary cell network device is a target cell network device.

S305: The original primary cell network device sends an RRC reconfiguration message to the terminal device.

The RRC reconfiguration message includes the configuration information of the LTM candidate primary cell. The RRC reconfiguration message indicates the terminal device to perform an uplink synchronization process and a downlink synchronization process for the candidate primary cell.

S306: The terminal device sends an RRC reconfiguration complete message to the original primary cell network device.

S307: The terminal device performs the downlink synchronization process for the candidate primary cell.

S308: The terminal device performs the uplink synchronization process for the candidate primary cell.

S309: The terminal device sends the L1 measurement result to the original primary cell network device.

In S309, the original primary cell network device determines the target primary cell.

S310: The original primary cell network device sends an LTM handover instruction to the terminal device.

The LTM handover instruction may include a medium access control (Medium Access Control, MAC) control element (Control Element, CE) indication information. The MAC CE indication information may include: a timing advance (Timing Advance, TA), a transmission configuration indication state (Transmission Configuration indication State, TCI State) sequence number (IDentity, ID), contention free random access (Contention Free Random Access, CFRA) resource information, an identifier of the configuration information of the LTM candidate primary cell.

It should be understood that when the TA is valid, a specific value of the TA is included in the MAC CE indication information; or when the TA is invalid, a specific value of the MAC CE is not included in the MAC CE indication information.

It should also be understood that in a process in which the terminal device performs uplink synchronization for each candidate primary cell network device, if the RRC reconfiguration message indicates the terminal device to measure a TA of the terminal device, the terminal device measures a timing advance of the original primary cell network device, and determines a timing advance of the candidate primary cell network device based on a receiving time difference between the original primary cell network device and the candidate primary cell network device. Alternatively, the original primary cell network device triggers contention free random access by using a physical downlink control channel command (Physical Downlink Control Channel, PDCCH) order to obtain a timing advance of the candidate primary cell network device, the terminal device initiates CFRA to the candidate primary cell network device to obtain a timing advance of the candidate primary cell network device, and then the original primary cell network device determines validity of the timing advance.

It should also be understood that if the MAC CE indication information includes the specific value of the TA, the terminal device may implement handover by sending one piece of uplink signaling, one uplink data packet, or other uplink information to the target cell network device. Specific sending content is not limited in this application. If the MAC CE indication information does not include the specific value of the TA, the terminal device may autonomously measure the TA corresponding to the target cell network device, and may implement handover by sending one piece of uplink signaling, one uplink data packet, or other uplink information to the target cell network device based on the measurement result. Specific sending content is not limited in this application.

S311: The terminal device disconnects from the original primary cell network device.

S312: The terminal device performs a random access procedure to complete LTM handover.

3. Release: When the terminal device supports both CHO and LTM, both the configuration information of the LTM candidate primary cell and the configuration information of the CHO candidate primary cell need to be configured. When the CHO procedure is triggered, to reduce running load of the terminal device, it is expected that the terminal device can cancel storing the configuration information of the LTM candidate primary cell, that is, release the configuration information of the LTM candidate primary cell.

4. Reservation: When the terminal device supports both CHO and LTM, both the configuration information of the LTM candidate primary cell and the configuration information of the CHO candidate primary cell need to be configured. When an LTM procedure may be triggered subsequently, to reduce a delay caused by sending the configuration information of the LTM candidate primary cell again, it is expected that the terminal device can continue to store the configuration information of the LTM candidate primary cell, that is, reserve the configuration information of the LTM candidate primary cell. It should be understood that concepts of reservation and storage in embodiments of this application are the same.

It should be understood that a same candidate primary cell may be used as both a CHO candidate primary cell and an LTM candidate primary cell. Some candidate primary cells may be used only as CHO candidate primary cells, and other candidate primary cells may be used only as LTM candidate primary cells. It should also be understood that in a same CHO procedure, release or reservation of configuration information of different LTM candidate primary cells may be the same or may be different. This is not limited in this application.

The following describes technical solutions in embodiments of this application with reference to the accompanying drawings in the embodiments of this application.

For ease of understanding embodiments of this application, the following descriptions are provided first.

First, to clearly describe the technical solutions in embodiments of this application, terms such as "first" and "second" are used in embodiments of this application to distinguish between same items or similar items that provide basically same functions or purposes. For example, first reservation indication information and second reservation indication information are merely used to distinguish different reservation indication information, and are not intended to limit a sequence of the first reservation indication information and the second reservation indication information. A person skilled in the art may understand that the words such as "first" and "second" do not limit a quantity or an execution sequence, and the words such as "first" and "second" do not define a definite difference.

Second, in embodiments of this application, terms such as "example" or "for example" represents giving an example, an illustration, or a description. Any embodiment or design solution described as "example" or "for example" in this application should not be construed as being preferred or advantageous over another embodiment or design solution. To be precise, the terms such as "example" or "for example" as used herein are intended to present the related concept in a specific manner.

Third, in embodiments of this application, "at least one" means one or more, and "a plurality of" means two or more. The term "and/or" describes an association relationship between associated objects and represents that three relationships may exist. For example, A and/or B may represent that: only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Fourth, in embodiments of this application, both "when" and "if" mean that an apparatus performs corresponding processing in an objective situation, are not intended to limit time, do not require the apparatus to necessarily have a determining action during implementation, and do not mean another limitation.

Fifth, "simultaneously" in embodiments of this application may be understood as being at a same time point, may be understood as being in a time period, or may be understood as being in a same period, and may be specifically understood with reference to the context.

Sixth, in embodiments of this application, "B corresponding to A" indicates that B is associated with A. "Performing B based on A" does not mean that B is performed based on A only, and B may also be performed based on A and/or other information.

Seventh, "predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Storing" may be storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into the decoder, the processor, or the communication apparatus. A type of the memory may be a storage medium in any form. This is not limited in this application.

Predefinition in this application may be understood as definition, pre-definition, storage, pre-storage, pre-negotiation, pre-configuration, solidification, or pre-burning.

Eighth, in embodiments of this application, "indication" may include a direct indication and an indirect indication, or may include an explicit indication and an implicit indication. Information indicated by a specific piece of information is referred to as to-be-indicated information. During specific implementation, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, the to-be-indicated information may alternatively be indicated through pre-agreement (for example, protocol-specification) on whether a specific information element is present, to reduce indication overheads to some extent.

Ninth, the following describes a plurality of embodiments in detail with reference to a plurality of flowcharts. However, it should be understood that the flowcharts and related descriptions of corresponding embodiments thereof are merely examples for ease of understanding, and shall not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

To support two cell handover mechanisms: CHO and LTM, a terminal device inevitably configures configuration information of a CHO candidate primary cell and configuration information of an LTM candidate primary cell. Currently, a topic that deserves attention is how to properly process configuration information of an LTM candidate primary cell in a CHO primary cell change for a terminal device that stores both the configuration information of the LTM candidate primary cell and configuration information of a CHO candidate primary cell when the CHO primary cell change is performed. Therefore, embodiments of this application provide a method for processing configuration information of a candidate primary cell. A main inventive idea of the method is as follows:

To effectively process configuration information of an LTM candidate primary cell, an original primary cell network device indicates, by using indication information, a processing policy for the configuration information of the LTM candidate primary cell, so that when determining to perform a CHO primary cell change, a terminal device may automatically reserve or release the configuration information of the LTM candidate primary cell according to the processing policy. Therefore, effective management of the configuration information of the LTM candidate primary cell is implemented.

The following describes in detail the method provided in embodiments of this application with reference to the accompanying drawings.

It should be understood that for ease of understanding and description, the following describes in detail the method provided in embodiments of this application by using interaction between a terminal device and a network device as an example. However, this should not constitute any limitation on an execution body of the method provided in this application. For example, the terminal device shown in the following embodiments may be replaced with a component (for example, a chip or a circuit) configured in the terminal device. The network device shown in the following embodiments may also be replaced with a component (for example, a chip or a circuit) configured in the network device.

A specific structure of the execution body of the method provided in embodiments of this application is not specifically limited in embodiments shown below, provided that a program that records code of the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

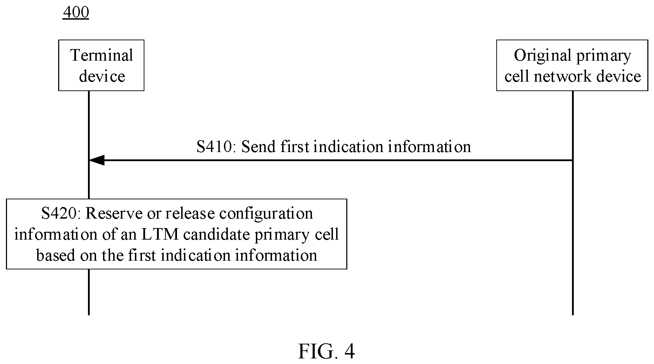

FIG. 4 is a schematic flowchart of a method 400 for processing configuration information of a candidate primary cell according to an embodiment of this application from a perspective of device interaction. As shown in FIG. 4, the method for processing configuration information of a candidate primary cell includes the following steps.

S410: An original primary cell network device sends first indication information to a terminal device.

It should be understood that for specific forms of the original primary cell network device and the terminal device, refer to the foregoing related descriptions. Details are not described herein again.

The first indication information is described in detail below.

The first indication information indicates a processing policy for configuration information of a layer 1/2 triggered mobility LTM candidate primary cell when a CHO primary cell change occurs for the terminal device.

Optionally, the configuration information of the LTM candidate primary cell may be configuration information of the LTM candidate primary cell that is not a CHO candidate primary cell; or the configuration information of the LTM candidate primary cell may be configuration information of the LTM candidate primary cell that is not used as a CHO target primary cell when a CHO primary cell change occurs for the terminal device.

It should be understood that occurrence of the CHO primary cell change indicated in the first indication information is a case in which, when the terminal device has the configuration information of the LTM candidate primary cell, the terminal device evaluates that at least one CHO candidate primary cell meets a corresponding execution condition and determines to perform the CHO primary cell change.

Therefore, to adapt to the case in which, when the terminal device has the configuration information of the LTM candidate primary cell, the terminal device evaluates that the at least one CHO candidate primary cell meets the corresponding execution condition and determines to perform the CHO primary cell change, the terminal device needs to have the configuration information of the LTM candidate primary cell, evaluate whether the at least one CHO candidate primary cell meets the corresponding execution condition, determine the CHO target primary cell based on an evaluation result, and determine to perform the CHO primary cell change.

It should be understood that the configuration information of the LTM candidate primary cell may be sent by the original primary cell network device to the terminal device by using radio resource control RRC reconfiguration information when sending the first indication information; or may be sent by the original primary cell network device to the terminal device by radio resource control RRC reconfiguration information before sending the first indication information. It should also be understood that for a specific procedure in which the terminal device evaluates whether the at least one CHO candidate primary cell meets the corresponding execution condition and a procedure in which the terminal device determines to perform the CHO primary cell change, refer to a related technology. Details are not described herein again.

The following specifically describes the processing policy for the configuration information of the LTM candidate primary cell when the CHO primary cell change occurs for the terminal device.

It should be understood that the processing policy for the configuration information of the LTM candidate primary cell when the CHO primary cell change occurs for the terminal device may be a policy that includes at least one processing manner, and the processing manner is a reservation manner, a release manner, and an autonomous processing manner. The reservation manner is a processing manner in which the terminal device reserves the configuration information of the LTM candidate primary cell when the CHO primary cell change occurs. Correspondingly, the release manner is a processing manner in which the terminal device releases the configuration information of the LTM candidate primary cell when the CHO primary cell change occurs. The release manner may be classified into two release manners: release upon execution and release upon successful execution. Release upon execution means that release is performed when the CHO primary cell change has been triggered. Release upon successful execution means that release is performed when the CHO primary cell change has been successfully executed. The autonomous processing manner is a processing manner in which the terminal device autonomously determines to reserve or release the configuration information of the LTM candidate primary cell when the CHO primary cell change occurs for the terminal device. The types of processing manners included in the processing policy for the configuration information of the LTM candidate primary cell when the CHO primary cell change occurs for the terminal device, as listed above, are merely examples, and should not constitute any limitation on this application.

It should also be understood that devices used to control the foregoing different processing manners in this embodiment may be a same device. For example, both a device controlling the reservation manner and a device controlling the release manner are the original primary cell network device. In this embodiment, the devices used to control the foregoing different processing manners may alternatively be different devices. For example, a device used to control the reservation manner and the release manner is the original primary cell network device, and a device used to control the autonomous processing manner is the terminal device.

It should be noted that in this embodiment of this application, a manner in which the first indication information indicates "the processing policy for the configuration information of the LTM candidate primary cell when the CHO primary cell change occurs for the terminal device" is not specifically limited. The following describes the manner in which the first indication information indicates "the processing policy for the configuration information of the LTM candidate primary cell when the CHO primary cell change occurs for the terminal device".

In an example, the first indication information may include information about a device controlling the processing manner, and information required when the device controlling the processing manner indicates the terminal device to process the configuration information of the LTM candidate primary cell when the CHO primary cell change occurs. In this manner, the processing policy for the configuration information of the LTM candidate primary cell can be more clearly indicated.

In another example, the first indication information may include only information required when the device controlling the processing manner indicates the terminal device to process the configuration information of the LTM candidate primary cell when the CHO primary cell change occurs. Because different devices controlling the processing manner correspond to different information required for processing, a device controlling the processing manner and a specific processing policy may be determined based on a type of the information required for processing. In this manner, transmission resources can be effectively saved.

In still another example, if the device controlling the processing manner is the original primary cell network device, the first indication information may include only the information required for processing; or if the device controlling the processing manner is the terminal device, the first indication information includes both the information about the device controlling the processing manner and the information required for processing. Correspondingly, in yet another example, if the device controlling the processing manner is the original primary cell network device, the first indication information may include both the information about the device controlling the processing manner and the information required for processing; or if the device controlling the processing manner is the terminal device, the first indication information may include only the information required for processing. The two manners may make the first indication information more flexible.

The information required for processing may be different based on different devices controlling the processing manner. For example, when the device controlling the processing manner is the original primary cell network device, the information required for processing may include processing policy information or other information for the configuration information of the LTM candidate primary cell. When the device controlling the processing manner is the terminal device, the information required for processing may include autonomous processing information or other information for the configuration information of the LTM candidate primary cell.

It should be understood that the processing policy information may include reservation policy information. The reservation policy information indicates that the processing policy for the configuration information of the LTM candidate primary cell when the CHO primary cell change occurs for the terminal device is a reservation policy. Correspondingly, the processing policy information may include release policy information. The release policy information indicates that the processing policy for the configuration information of the LTM candidate primary cell when the CHO primary cell change occurs for the terminal device is a release policy.

It should be noted that for the first indication information when the device controlling the processing manner is the original primary cell network device, a specific manner of how to indicate, by using the first indication information, the processing policy for the configuration information of the LTM candidate primary cell when the CHO primary cell change occurs for the terminal device is not limited in this embodiment of this application.

Therefore, in this embodiment of this application, the specific manner of how the original primary cell network device indicates, by using the first indication information, the processing policy for the configuration information of the LTM candidate primary cell when the CHO primary cell change occurs for the terminal device. In other words, the specific manners of indicating the processing policy for the configuration information of the LTM candidate primary cell when the CHO primary cell change occurs for the terminal device, as listed above, are merely examples, and should not constitute any limitation on this application.

A transmission manner of the indication information is also not limited in this embodiment.

In an example, the first indication information may be carried in radio resource control RRC reconfiguration information.

Specifically, when the configuration information of the LTM candidate primary cell and CHO configuration information are sent to the terminal device by using the RRC reconfiguration information, the configuration information of the LTM candidate primary cell and the CHO configuration information may be sent to the terminal device together with the first indication information. In this case, the first indication information may be a predefined field in the RRC reconfiguration information. The CHO configuration information includes the configuration information of the CHO candidate primary cell and the execution condition, and there may be one or more CHO candidate primary cells.

For another example, the first indication information may be carried in the configuration information of the CHO candidate primary cell, and the configuration information of the LTM candidate primary cell, the configuration information of the CHO candidate primary cell with the first indication information carried, and the execution condition are carried in the RRC reconfiguration information. Specifically, the first indication information may be associated with the configuration information of the corresponding CHO candidate primary cell for storage, a predefined field in the configuration information of the CHO candidate primary cell indicates the first indication information, and then the configuration information of the CHO candidate primary cell is indicated by using a defined field in the RRC reconfiguration information.

It should be understood that the execution condition of the CHO candidate primary cell may be any one of an event A3, an event A4, and an event A5; or may be any two of an event A3, an event A4, and an event A5; or may be an event A3, an event A4, or an event A5. The event A3 indicates that quality of a neighboring cell is better than that of an original cell. Occurrence of this event triggers handover. The event A4 indicates that quality of a neighboring cell is greater than an absolute threshold. Occurrence of this event triggers handover. The event A5 indicates that quality of an original cell is less than an absolute threshold and quality of a neighboring cell is greater than an absolute threshold. Occurrence of this event triggers handover.

It should also be understood that in the foregoing examples, execution conditions used by different CHO candidate primary cells may be the same or different. This is not limited in this application.

In another example, the first indication information may be carried in dedicated signaling. To be specific, in this embodiment of this application, the first indication information may be sent to the terminal device as a piece of independent signaling by the original primary cell network device, and the first indication information and the RRC reconfiguration information may be sent to the terminal device together, so that a speed of parsing the indication information can be improved. "Co-transmission" may be performed at a single time point or in a single time period. This is not limited in this application.

S420: Reserve or release the configuration information of the LTM candidate primary cell based on the first indication information.

It should be understood that a prerequisite for the terminal device to reserve or release the configuration information of the LTM candidate primary cell based on the first indication information is as follows: The terminal device has performed the CHO evaluation, determined the CHO target primary cell based on the evaluation result, and determined to perform the CHO primary cell change. The CHO target primary cell is a CHO candidate primary cell to which the terminal device is to be changed. The following briefly describes steps for determining to perform the CHO primary cell change.

The terminal device receives the RRC reconfiguration information sent by the original primary cell network device, and performs CHO evaluation based on the configuration information of the CHO candidate primary cell and the execution condition that are carried in the RRC reconfiguration information, for example, evaluates whether quality of at least one CHO candidate primary cell is better than that of an original primary cell; and if yes, determines to perform the CHO primary cell change; or evaluates whether quality of at least one CHO candidate primary cell is greater than an absolute threshold; and if yes, determines to perform the CHO primary cell change; or evaluates whether quality of at least one CHO candidate primary cell is greater than an absolute threshold, and quality of an original primary cell is less than another absolute threshold; and if yes, determines to perform the CHO primary cell change.

It should be understood that execution conditions corresponding to different CHO candidate primary cells may be the same or different, and a same CHO candidate primary cell may correspond to one or more execution conditions. Therefore, different CHO candidate primary cells may be corresponding to different evaluation processes. This is not specifically limited in this embodiment of this application.

Therefore, in the method for processing configuration information of a candidate primary cell provided in this embodiment of this application, the original primary cell network device indicates, by using the indication information, the processing policy for the configuration information of the LTM candidate primary cell, so that when determining to perform the CHO primary cell change, the terminal device may automatically reserve or release the configuration information of the LTM candidate primary cell according to the processing policy. Therefore, effective management of the configuration information of the LTM candidate primary cell is implemented.

It should be noted that when determining to perform the CHO primary cell change, the terminal device may automatically reserve or release the configuration information of the LTM candidate primary cell according to the processing policy, instead of always storing the configuration information of the LTM candidate primary cell or always releasing the configuration information of the LTM candidate primary cell, so that the configuration information of the LTM candidate primary cell can be released when it is unnecessary to reserve the configuration information of the LTM candidate primary cell, thereby reducing load of the terminal device; and the configuration information of the LTM candidate primary cell can be reserved when it is necessary to reserve the configuration information of the LTM candidate primary cell, thereby avoiding a waste of resources caused by repeated sending of the configuration information of the LTM candidate primary cell.

It should be understood that information included in the first indication information is also different based on different devices controlling the processing manner, and specific solutions for reserving or releasing the configuration information of the LTM candidate primary cell based on the first indication information are also different. Therefore, the following separately describes the first indication information when the device controlling the processing manner is the original primary cell network device or the terminal device, and a specific solution for reserving or releasing the configuration information of the LTM candidate primary cell based on the first indication information. When the device controlling the processing manner is the original primary cell network device, the corresponding method for processing the configuration information of the candidate primary cell is Solution 1. When the device controlling the processing manner is the terminal device, the corresponding method for processing the configuration information of the candidate primary cell is Solution 2.

### Solution 1:

When the device controlling the processing manner is the original primary cell network device, the first indication information sent by the original primary cell network device to the terminal device includes at least one piece of the following information:
(1) private indication information corresponding to configuration information of each CHO candidate primary cell for releasing or reserving the configuration information of the LTM candidate primary cell;
(2) common indication information corresponding to configuration information of at least one CHO candidate primary cell set for releasing or reserving the configuration information of the LTM candidate primary cell, where the configuration information of the CHO candidate primary cell set includes configuration information of at least one CHO candidate primary cell; and
(3) release occasion indication information, where the release occasion indication information indicates to release the configuration information of the LTM candidate primary cell after the CHO primary cell change is successfully completed.

Each item is described below.
(1) The private indication information is first release indication information or first reservation indication information.

It should be understood that configuration information of each CHO candidate primary cell corresponds to one piece of private indication information, and the private indication information is the first release indication information or the first reservation indication information. The first release indication information is information corresponding to configuration information of one CHO candidate primary cell for releasing the configuration information of the LTM candidate primary cell, and the first reservation indication information is information corresponding to configuration information of one CHO candidate primary cell for reserving the configuration information of the LTM candidate primary cell.

It should also be understood that the configuration information of the CHO candidate primary cell is configuration information of one CHO candidate primary cell, and the configuration information of the CHO candidate primary cell may include an identifier of the CHO candidate primary cell, a maximum quantity of users of the CHO candidate primary cell, transmit power of the CHO candidate primary cell, and the like. The identifier of the CHO candidate primary cell is an identifier indicating an identity of the CHO candidate primary cell, for example, may be a name of the CHO candidate primary cell, or may be a digit, a letter, or other information that represents the identity of the CHO candidate primary cell. This is not limited in this application.

Therefore, each CHO candidate primary cell may be associated with one piece of corresponding private indication information. That is, the private indication information is indication information on a per CHO candidate primary cell basis. In other words, configuration information of one CHO candidate primary cell may correspond to one piece of first release indication information or one piece of first reservation indication information, and types of private indication information corresponding to configuration information of a plurality of CHO candidate primary cells may be the same or different.

It should be noted that the transmission manner of the first indication information in Solution 1, as described above, may be carried in the radio resource control RRC reconfiguration information or the dedicated signaling. When the private indication information is carried in the radio resource control RRC reconfiguration information, each piece of private indication information may be carried in configuration information of a corresponding CHO candidate primary cell in the radio resource control RRC reconfiguration information.

It should be understood that each piece of private indication information corresponds to configuration information of one CHO candidate primary cell. Therefore, the original primary cell network device may carry each piece of private indication information in the configuration information of the corresponding CHO candidate primary cell, and carry the configuration information of the LTM candidate primary cell, configuration information of all CHO candidate primary cells that carries corresponding private indication information, and the execution condition in the RRC reconfiguration information. Specifically, the original primary cell network device may associate each piece of private indication information with the respective configuration information corresponding to the CHO candidate primary cell for storage, a predefined field in the configuration information of the corresponding CHO candidate primary cell indicates the private indication information, and then the configuration information of the CHO candidate primary cell is indicated by using a defined field in the RRC reconfiguration information. In this carrying manner, more refined management can be implemented on the configuration information of the LTM primary cell.

Therefore, in this embodiment of this application, each CHO candidate primary cell may be associated with one piece of corresponding private indication information. It should be understood that types of private indication information associated with different CHO candidate primary cells may be the same or different. Therefore, for a case in which different CHO candidate primary cells are used as CHO target primary cells, processing policies for the configuration information of the LTM primary cell that are indicated by respective private indication information corresponding to different CHO candidate primary cells when the CHO primary cell change occurs for the terminal device may also be the same or different. Therefore, based on a manner in which each CHO candidate primary cell is associated with one piece of corresponding private indication information, and the private indication information is used for transmission, more refined management can be implemented on the configuration information of the LTM primary cell.

(2) The common indication information is second release indication information or second reservation indication information.

It should be understood that configuration information of each CHO candidate primary cell set corresponds to one piece of common indication information, and the common indication information is the second release indication information or the second reservation indication information. The second release indication information is information corresponding to configuration information of all CHO candidate primary cells in configuration information of one CHO candidate primary cell set for releasing the configuration information of the LTM candidate primary cell, and the second reservation indication information is information corresponding to configuration information of all CHO candidate primary cells in configuration information of one CHO candidate primary cell set for reserving the configuration information of the LTM candidate primary cell.

Therefore, configuration information of each CHO candidate primary cell set may be associated with one piece of corresponding common indication information. That is, the common indication information is indication information on a per CHO candidate primary cell set basis. In other words, configuration information of one CHO candidate primary cell set corresponds to one piece of second release indication information or one piece of second reservation indication information, and types of common indication information corresponding to configuration information of different CHO candidate primary cell sets are different.

It should be noted that when the first indication information includes the common indication information and does not include the private indication information, there is common indication information corresponding to configuration information of at least one CHO candidate primary cell set, and the configuration information of the CHO candidate primary cell set includes configuration information of at least one CHO candidate primary cell. Content of the configuration information of the CHO candidate primary cell is as described above. Details are not described herein again. Therefore, the configuration information of the CHO candidate primary cell set may include configuration information of a first CHO candidate primary cell set and/or configuration information of a second CHO candidate primary cell set. It should be understood that there is a first mapping relationship between the configuration information of the first CHO candidate primary cell set and the common indication information for releasing the configuration information of the LTM candidate primary cell; and/or there is a second mapping relationship between the configuration information of the second CHO candidate primary cell set and the common indication information for reserving the configuration information of the LTM candidate primary cell.

It should be understood that both the first mapping relationship and the second mapping relationship may be a one-to-one mapping relationship, or may be a many-to-one mapping relationship or the like. This is not specifically limited in this embodiment. It should also be understood that in this embodiment of this application, configuration information of a specific CHO candidate primary cell set in which configuration information of each CHO candidate primary cell is located is not specifically limited.

In an example, configuration information of a part of all the CHO candidate primary cells may be located in the configuration information of the first CHO candidate primary cell set, and configuration information of the other part of all the CHO candidate primary cells may be located in the configuration information of the second CHO candidate primary cell set. In another example, the configuration information of all the CHO candidate primary cells may be in the configuration information of the first CHO candidate primary cell set. In still another example, the configuration information of all the CHO candidate primary cells may be in the configuration information of the second CHO candidate primary cell set.

In other words, when the first indication information includes only the second release indication information, the configuration information of all the CHO candidate primary cells is located in the configuration information of the first CHO candidate primary cell set; or when the first indication information includes only the second reservation indication information, the configuration information of all the CHO candidate primary cells is located in the configuration information of the second CHO candidate primary cell set. Alternatively, when the first indication information includes the second release indication information and the second reservation indication information, configuration information of a part of all the CHO candidate primary cells may be located in the configuration information of the first CHO candidate primary cell set, and configuration information of the other part of all the CHO candidate primary cells may be located in the configuration information of the second CHO candidate primary cell set.

Therefore, the second release indication information and/or the second reservation indication information may be associated with a same piece of first indication information for a plurality of CHO candidate primary cells. That is, when any one of the plurality of CHO candidate primary cells is used as the CHO target primary cell, common indication information associated with configuration information of a set in which the CHO candidate primary cell is located is the same. Therefore, for different CHO target primary cells, common indication information associated with configuration information of sets in which the CHO target primary cells are located may be the same. Therefore, based on a manner in which configuration information of one CHO candidate primary cell set is associated with one piece of corresponding common indication information, and the common indication information is used for transmission, the unified first indication information may be transmitted. When a larger quantity of CHO candidate primary cells is included in the configuration information of the CHO candidate primary cell set, a smaller quantity of pieces of common indication information needs to be transmitted, which can effectively save transmission resources.

### (3) Release occasion indication information

It should be understood that the release occasion indication information indicates to release the configuration information of the LTM candidate primary cell after the CHO primary cell change is successfully completed, or may indicate to release the configuration information of the LTM candidate primary cell under another condition. A release moment indicated by the release occasion indication information is not specifically limited in this embodiment of this application.

It should also be understood that the release occasion indication information may be a field representing a "release occasion", or may be a digit, a letter, or other information that represents a "release occasion". This is not limited in this application.

It should be noted that the release occasion indication information may be of any one of the following types: conditional release occasion indication information or unconditional release occasion indication information. For example, the conditional release occasion indication information is identified by "A", and the unconditional release occasion indication information may be identified by "B". For the conditional release occasion indication information, whether each piece of first release indication information is associated with the release occasion indication information may be further distinguished by using digits "0" and "1". That is, the release occasion indication information associated with the first release indication information may indicate to release the configuration information of the LTM candidate primary cell after the CHO primary cell change is successfully completed. Alternatively, the release occasion indication information not associated with the first release indication information may indicate to release the configuration information of the LTM candidate primary cell after the CHO primary cell change has been triggered. Similarly, the release occasion indication information associated with the second release indication information may indicate to release the configuration information of the LTM candidate primary cell after the CHO primary cell change is successfully completed. Alternatively, the release occasion indication information not associated with the second release indication information may indicate to release the configuration information of the LTM candidate primary cell after the CHO primary cell change has been triggered.

Therefore, a part or all of different first release indication information on a per CHO candidate primary cell basis may be selectively associated with the release occasion indication information. In an example, there are four CHO candidate primary cells. When the release occasion indication information is the conditional release occasion indication information, if the second and the fourth of the four CHO candidate primary cells are associated with the release occasion indication information, the release occasion indication information may be represented as A0101; or if all the four CHO candidate primary cells are associated with the release occasion indication information, the release occasion indication information may be represented as A1111. When the release occasion indication information is the unconditional release occasion indication information, the release occasion indication information may be represented as B. It should be understood that information indicated by "A1111" and "B" has same effect.

It should be understood that if the first or the third CHO candidate primary cell in the four CHO candidate primary cells is used as the CHO target primary cell, the configuration information of the LTM candidate primary cell is released after the CHO primary cell change has been triggered; or if the second or fourth CHO candidate primary cell in the four CHO candidate primary cells is used as the CHO target primary cell, the configuration information of the LTM candidate primary cell is released after the CHO primary cell change is successfully completed.

Correspondingly, a part or all of the second release indication information in a per CHO candidate primary cell set basis may be selectively associated with the release occasion indication information. This is not specifically limited in this embodiment. In an example, there is one CHO candidate primary cell set corresponding to the second release indication information. When the release occasion indication information is the conditional release occasion indication information, the release occasion indication information may be represented as A&1. When the release occasion indication information is the unconditional release occasion indication information, the release occasion indication information may be represented as B. It should be understood that information indicated by "A&1" and "B" has same effect. In another example, there are two CHO candidate primary cell sets corresponding to the second release indication information. When the release occasion indication information is the conditional release occasion indication information, if the first CHO candidate primary cell set in the two CHO candidate primary cell sets is associated with the release occasion indication information, the release occasion indication information may be represented as "A&10".

It should be understood that if any CHO candidate primary cell in the first CHO candidate primary cell set in the two CHO candidate primary cell sets is used as the CHO target primary cell, the configuration information of the LTM candidate primary cell is released after the CHO primary cell change is successfully completed; or if any CHO candidate primary cell in the second CHO candidate primary cell set in the two CHO candidate primary cell sets is used as the CHO target primary cell, the configuration information of the LTM candidate primary cell is released after the CHO primary cell change has been triggered.

Therefore, the release occasion indication information may be combined with the first release indication information and/or the second release indication information, so that a release occasion can be selective, and content of the first indication information can be selective.

The foregoing specifically describes any one type of first indication information related to "reservation", "release", or "release occasion" in a conceptual aspect. The following describes a form and a forming procedure of any type of first indication information related to "reservation", "release", or "release occasion".

It should be understood that to implement forming of any type of indication information related to "reservation", "release", or "release occasion", the original primary cell network device may associate the first release indication information and/or the first reservation indication information with the CHO candidate primary cell by using the identifier of the CHO candidate primary cell in the configuration information of the CHO candidate primary cell in the first indication information forming procedure; or the original primary cell network device may associate the second release indication information or the second reservation indication information with the CHO candidate primary cell by using the identifier of the configuration information of the CHO candidate primary cell set and the identifier of the CHO candidate primary cell in the first indication information forming procedure; or the original primary cell network device may associate the release occasion indication information with the CHO candidate primary cell by using the identifier of the CHO candidate primary cell corresponding to the first release indication information and/or the identifier of the configuration information of the first CHO candidate primary cell set in the first indication information forming procedure.

Any type of indication information related to "reservation", "release", or "release occasion"" is information indicating to reserve or release the configuration information of the LTM candidate primary cell, for example, may be a field of "reservation", "release", or "release occasion", or may be a digit, a letter, or other information that represents "reservation", "release", or "release occasion". This is not limited in this application. In addition, the identifier of the CHO candidate primary cell is an identifier indicating an identity of the CHO candidate primary cell, for example, may be a name of the CHO candidate primary cell, or may be a digit, a letter, or other information that represents the identity of the CHO candidate primary cell. This is not limited in this application. In addition, the identifier of the configuration information of the CHO candidate primary cell set is an identifier indicating an identity of the CHO candidate primary cell set, for example, may be a name of the CHO candidate primary cell set, or may be a digit, a letter, or other information that represents the identity of the CHO candidate primary cell set. This is not limited in this application.

The foregoing describes a form and a forming procedure of any type of indication information related to "reservation", "release", or "release occasion". The following describes the processing policy for the configuration information of the LTM candidate primary cell.

In Solution 1, "the processing policy for the configuration information of the LTM candidate primary cell" may be related and/or not related to a CHO target cell. It should be understood that based on differences between the two processing manners: "release manner" and "reservation manner", and different release occasions of the two release processing manners: "release upon execution" and "release upon successful execution", when the "processing policy for the configuration information of the LTM candidate primary cell" is related to the CHO target cell, the "processing policy for the configuration information of the LTM candidate primary cell" provided in this embodiment may be any one or more of the following policies: "when a first condition is met, reserve the configuration information of the LTM candidate primary cell", "when a second condition is met, release the configuration information of the LTM candidate primary cell", and/or "when a third condition is met, release the configuration information of the LTM candidate primary cell". It should also be understood that when the "processing policy for the configuration information of the LTM candidate primary cell" is not related to the CHO target cell, the "processing policy for the configuration information of the LTM candidate primary cell" provided in this embodiment may be any one or more of the following policies: "when a fourth condition is met, reserve the configuration information of the LTM candidate primary cell", "when a fifth condition is met, release the configuration information of the LTM candidate primary cell", and/or "when a sixth condition is met, release the configuration information of the LTM candidate primary cell".

It should be noted that when the first indication information includes any one or more pieces of indication information of the private indication information, the common indication information, or the release occasion indication information, there are same or different "processing policies for the configuration information of the LTM candidate primary cell". In other words, any one of the foregoing three "processing policies for the configuration information of the LTM candidate primary cell" is determined based on specific content of the first indication information.

It should be understood that a case of content included in the first indication information may include any one of the following cases:
Case 1: The first indication information includes the private indication information.
Case 2: The first indication information includes the common indication information.
Case 3: The first indication information includes the private indication information and the common indication information.
Case 4: The first indication information includes the private indication information and the release occasion indication information.
Case 5: The first indication information includes the common indication information and the release occasion indication information.
Case 6: The first indication information includes the private indication information, the common indication information, and the release occasion indication information.

Therefore, when the "processing policy for the configuration information of the LTM candidate primary cell" is related to the CHO target primary cell, with reference to different cases of the content of the first indication information, the following separately describes the three processing policies: "when the first condition is met, reserve the configuration information of the LTM candidate primary cell", "when the second condition is met, release the configuration information of the LTM candidate primary cell", and "when the third condition is met, release the configuration information of the LTM candidate primary cell".

The configuration information of the LTM candidate primary cell is reserved when the first condition is met, and the first condition includes at least one of the following conditions:
(1) first indication information corresponding to configuration information of a CHO target primary cell is the private indication information for reserving the configuration information of the LTM candidate primary cell; and
(2) first indication information that has a mapping relationship with configuration information of a set in which the configuration information of the CHO target primary cell is located is the common indication information for reserving the configuration information of the LTM candidate primary cell.

It should be noted that in Case 1 or Case 4, the first condition is: The first indication information corresponding to the configuration information of the CHO target primary cell is the private indication information for reserving the configuration information of the LTM candidate primary cell. In Case 2 or Case 5, the first condition is: The first indication information that has the mapping relationship with the configuration information of the set in which the configuration information of the CHO target primary cell is located is the common indication information for reserving the configuration information of the LTM candidate primary cell. In Case 3 or Case 5, the first condition is: The first indication information corresponding to the configuration information of the CHO target primary cell is the private indication information for reserving the configuration information of the LTM candidate primary cell; and the first indication information that has the mapping relationship with the configuration information of the set in which the configuration information of the CHO target primary cell is located is the common indication information for reserving the configuration information of the LTM candidate primary cell.

Correspondingly, in Case 1 or Case 4, a policy of "when the first condition is met, reserve the configuration information of the LTM candidate primary cell" is: if the first indication information corresponding to the configuration information of the CHO target primary cell is the private indication information for reserving the configuration information of the LTM candidate primary cell, the configuration information of the LTM candidate primary cell is reserved.

In Case 2 or Case 5, a policy of "when the first condition is met, reserve the configuration information of the LTM candidate primary cell" is: if the first indication information that has the mapping relationship with the configuration information of the set in which the configuration information of the CHO target primary cell is located is the common indication information for reserving the configuration information of the LTM candidate primary cell, the configuration information of the LTM candidate primary cell is reserved.

In Case 3 or Case 6, a policy of "when the first condition is met, reserve the configuration information of the LTM candidate primary cell" is: if the first indication information corresponding to the configuration information of the CHO target primary cell is the private indication information for reserving the configuration information of the LTM candidate primary cell, and the first indication information that has the mapping relationship with the configuration information of the set in which the configuration information of the CHO target primary cell is located is the common indication information for reserving the configuration information of the LTM candidate primary cell, the configuration information of the LTM candidate primary cell is reserved.

It should be noted that for a reservation operation, the configuration information of the LTM candidate primary cell may be reserved and stored on the terminal device. A specific storage location or path is not limited in this application. In addition, this reservation manner is merely an example, and should not constitute any limitation on this application.

Therefore, the terminal device may reserve the configuration information of the LTM candidate primary cell according to the processing policy, to avoid that the terminal device repeatedly obtains the configuration information of the LTM candidate primary cell when the terminal device needs to perform LTM handover subsequently, thereby reducing signaling overheads. On this basis, when the "processing policy for the configuration information of the LTM candidate primary cell" may be related to the CHO target primary cell, the first indication information corresponds to different reservation policies when including different content, to improve flexibility of reserving the configuration information of the LTM candidate primary cell.

The foregoing describes the solution for reserving the configuration information of the LTM candidate primary cell. The following describes the solution for releasing the configuration information of the LTM candidate primary cell.

It should be understood that whether the first indication information includes the release occasion indication information may affect a sequence of performing the CHO primary cell change and releasing the configuration information of the LTM candidate primary cell. Therefore, a case in which whether the first indication information includes the release occasion indication information and a specific solution for releasing the configuration information of the LTM candidate primary cell are described in detail as follows.

Case 1: The first indication information does not include the release occasion indication information.

Correspondingly, when the second condition is met, the configuration information of the LTM candidate primary cell is released, and the second condition includes at least one of the following conditions:
(1) the CHO primary cell change has been triggered and performed, and first indication information corresponding to configuration information of a CHO target primary cell is the private indication information for releasing the configuration information of the LTM candidate primary cell; and
(2) the CHO primary cell change has been triggered and performed, and first indication information that has a mapping relationship with configuration information of a set in which the configuration information of the CHO target primary cell is located is the common indication information for releasing the configuration information of the LTM candidate primary cell.

It should be understood that Case 1 may include any one or more of Case 1, Case 2, or Case 3. In Case 1, the second condition is: The CHO primary cell change has been triggered and performed, and first indication information corresponding to configuration information of a CHO target primary cell is the private indication information for releasing the configuration information of the LTM candidate primary cell. In Case 2, the second condition is: The CHO primary cell change has been triggered and performed, and first indication information that has a mapping relationship with configuration information of a set in which the configuration information of the CHO target primary cell is located is the common indication information for releasing the configuration information of the LTM candidate primary cell. In Case 3, the second condition is: The CHO primary cell change has been triggered and performed, and first indication information corresponding to configuration information of a CHO target primary cell is the private indication information for releasing the configuration information of the LTM candidate primary cell; and the CHO primary cell change has been triggered and performed, and first indication information that has a mapping relationship with configuration information of a set in which the configuration information of the CHO target primary cell is located is the common indication information for releasing the configuration information of the LTM candidate primary cell.

Correspondingly, in Case 1, a policy of "when the second condition is met, release the configuration information of the LTM candidate primary cell" is: if the CHO primary cell change has been triggered and performed, and first indication information corresponding to configuration information of a CHO target primary cell is the private indication information for releasing the configuration information of the LTM candidate primary cell, the configuration information of the LTM candidate primary cell is released.

In Case 2, a policy of "when the second condition is met, release the configuration information of the LTM candidate primary cell" is: if the CHO primary cell change has been triggered and performed, and first indication information that has a mapping relationship with configuration information of a set in which the configuration information of the CHO target primary cell is located is the common indication information for releasing the configuration information of the LTM candidate primary cell, the configuration information of the LTM candidate primary cell is released.

In Case 3, a policy of "when the second condition is met, release the configuration information of the LTM candidate primary cell" is: if the CHO primary cell change has been triggered and performed, and first indication information corresponding to configuration information of a CHO target primary cell is the private indication information for releasing the configuration information of the LTM candidate primary cell; and the CHO primary cell change has been triggered and performed, and first indication information that has a mapping relationship with configuration information of a set in which the configuration information of the CHO target primary cell is located is the common indication information for releasing the configuration information of the LTM candidate primary cell, the configuration information of the LTM candidate primary cell is released, and the configuration information of the LTM candidate primary cell is released.

It should be noted that for the foregoing release operation, specifically, the configuration information of the LTM candidate primary cell may be deleted when the CHO primary cell change has been triggered and performed, or the configuration information of the LTM candidate primary cell is released in another manner when the CHO primary cell change has been triggered and performed. This is not limited in this application. It should also be understood that "the CHO primary cell change has been triggered and performed" may be an operation performed when the terminal device performs a change after evaluation, in other words, may be an operation performed when it is evaluated that there is a CHO target primary cell that meets a corresponding execution condition, or an operation performed when the original primary cell network device is disconnected, or an operation performed when the terminal device accesses the target primary cell network device. Therefore, a specific operation of "the CHO primary cell change has been triggered and performed" is not specifically limited in this embodiment of this application.

Optionally, after the terminal device triggers and performs the CHO primary cell change, the CHO primary cell change may fail to be performed. If the configuration information of the LTM candidate primary cell has been released when the CHO primary cell change fails to be performed and first indication information corresponding to a CHO candidate primary cell is to reserve the configuration information of the LTM candidate primary cell when cell reselection is performed, in the method, second indication information may be sent to the target primary cell network device when the configuration information of the LTM candidate primary cell has been released and cell reselection is performed, or after the configuration information of the LTM candidate primary cell has been released and cell reselection is performed. The second indication information indicates released LTM candidate primary cell configuration information.

It should be understood that a specific representation form of the "second indication information" may be a field representing "the terminal device has released the configuration information of the LTM candidate primary cell", where for example, the field "released" is a field representing "the terminal device has released the configuration information of the LTM candidate primary cell"; or may be indication information such as an identifier, an index, or a number that represents "released". For example, a digit number 32 represents that the configuration information of the LTM candidate primary cell has been released, and 32A represents that the configuration information of the LTM candidate primary cell has been released in Solution 1. This is not limited in this application.

In other words, after the terminal device triggers and performs the CHO primary cell change, a result of performing the CHO primary cell change is success or failure. In Case 1, a condition for releasing the configuration information of the LTM candidate primary cell is that the CHO primary cell change has been triggered and performed, and is not related to the result of performing the CHO primary cell change. When it is determined that the CHO primary cell change fails to be performed, cell reselection may be performed and a reselected CHO target primary cell is accessed. Therefore, first indication information corresponding to two consecutive CHO primary cell changes may be inconsistent. For example, if the first indication information before reselection is to release the configuration information of the LTM candidate primary cell, first indication information corresponding to the reselected CHO candidate primary cell is to reserve the configuration information of the LTM candidate primary cell, in this embodiment of this application, the second indication information indicates that the configuration information of the LTM candidate primary cell has been released may be sent to the target primary cell network device, so that the target primary cell network device determines whether to reconfigure the LTM candidate primary cell for the terminal device. If the LTM candidate primary cell is reconfigured for the terminal device, timeliness of subsequently receiving the configuration information of the LTM candidate primary cell by the terminal device can be improved. If it is determined that the LTM candidate primary cell does not need to be reconfigured for the terminal device, a waste of communication resources can be avoided.

It should be understood that in Case 1, different specific content of the first indication information corresponds to different release policies. In the first indication information with different specific content, when "the processing policy for the configuration information of the LTM candidate primary cell" is related to the CHO target primary cell, the policy for releasing the configuration information of the LTM candidate primary cell is selective.

Case 2: The first indication information includes the release occasion indication information. In Case 2, the unconditional release occasion indication information is used as an example for description.

Correspondingly, when the third condition is met, the configuration information of the LTM candidate primary cell is released, and the third condition includes at least one of the following conditions:
(1) the CHO primary cell change has been successfully performed, and first indication information corresponding to configuration information of a CHO target primary cell is the private indication information for releasing the configuration information of the LTM candidate primary cell; and
(2) the CHO primary cell change has been successfully performed, and first indication information that has a mapping relationship with configuration information of a set in which the configuration information of the CHO target primary cell is located is the common indication information for releasing the configuration information of the LTM candidate primary cell.

It should be understood that Case 2 may include any one or more of Case 4, Case 5, or Case 6. In Case 4, the third condition is: The CHO primary cell change is successfully performed, and first indication information corresponding to configuration information of a CHO target primary cell is the private indication information for releasing the configuration information of the LTM candidate primary cell. In Case 5, the third condition is: The CHO primary cell change is successfully performed, and first indication information that has a mapping relationship with configuration information of a set in which the configuration information of the CHO target primary cell is located is the common indication information for releasing the configuration information of the LTM candidate primary cell. In Case 6, the third condition is: The CHO primary cell change is successfully performed, and first indication information corresponding to configuration information of a CHO target primary cell is the private indication information for releasing the configuration information of the LTM candidate primary cell; and the CHO primary cell change is successfully performed, and first indication information that has a mapping relationship with configuration information of a set in which the configuration information of the CHO target primary cell is located is the common indication information for releasing the configuration information of the LTM candidate primary cell.

Correspondingly, in Case 4, a policy of "when the third condition is met, release the configuration information of the LTM candidate primary cell" is: if the CHO primary cell change is successfully performed, and first indication information corresponding to configuration information of a CHO target primary cell is the private indication information for releasing the configuration information of the LTM candidate primary cell, the configuration information of the LTM candidate primary cell is released.

In Case 5, a policy of "when the third condition is met, release the configuration information of the LTM candidate primary cell" is: if the CHO primary cell change is successfully performed, and first indication information that has a mapping relationship with configuration information of a set in which the configuration information of the CHO target primary cell is located is the common indication information for releasing the configuration information of the LTM candidate primary cell, the configuration information of the LTM candidate primary cell is released.

In Case 6, a policy of "when the third condition is met, release the configuration information of the LTM candidate primary cell" is: if the CHO primary cell change is successfully performed, and first indication information corresponding to configuration information of a CHO target primary cell is the private indication information for releasing the configuration information of the LTM candidate primary cell; and the CHO primary cell change is successfully performed, and first indication information that has a mapping relationship with configuration information of a set in which the configuration information of the CHO target primary cell is located is the common indication information for releasing the configuration information of the LTM candidate primary cell, the configuration information of the LTM candidate primary cell is released.

It should be noted that for the foregoing release operation, specifically, the configuration information of the LTM candidate primary cell may be deleted when the CHO primary cell change is successfully performed, or the configuration information of the LTM candidate primary cell is released in another manner when the CHO primary cell change is successfully performed. This is not limited in this application.

It should be understood that when the first indication information with same content includes the release occasion indication information, the release policy is selective, so that processing of the configuration information of the LTM candidate primary cell is more flexible.

Therefore, when the "processing policy for the configuration information of the LTM candidate primary cell" may be related to the CHO target primary cell, different specific content of the first indication information correspond to different processing policies. In the first indication information with different specific content, when "the processing policy for the configuration information of the LTM candidate primary cell" is related to the CHO target primary cell, the processing policy for the configuration information of the LTM candidate primary cell is selective.

In the foregoing, when the "processing policy for the configuration information of the LTM candidate primary cell" is related to the CHO target primary cell, with reference to different cases of the content of the first indication information, the following separately describes the three processing policies: "when the first condition is met, reserve the configuration information of the LTM candidate primary cell", "when the second condition is met, release the configuration information of the LTM candidate primary cell", and "when the third condition is met, release the configuration information of the LTM candidate primary cell". All the foregoing three processing policies are related to the CHO target primary cell. It should be understood that the processing policy may alternatively be not related to the CHO target primary cell.

Therefore, in the following, when the "processing policy for the configuration information of the LTM candidate primary cell" is not related to the CHO target primary cell, with reference to different cases of the content of the first indication information, the following separately describes the three processing policies: "when the fourth condition is met, reserve the configuration information of the LTM candidate primary cell", "when the fifth condition is met, release the configuration information of the LTM candidate primary cell", and "when the sixth condition is met, release the configuration information of the LTM candidate primary cell".

The configuration information of the LTM candidate primary cell is reserved when the fourth condition is met, and the fourth condition includes at least one of the following conditions:
(1) first indication information corresponding to configuration information of all CHO candidate primary cells is the private indication information for reserving the configuration information of the LTM candidate primary cell; and
(2) first indication information that has a mapping relationship with configuration information of all CHO candidate primary cell sets is the common indication information for reserving the configuration information of the LTM candidate primary cell.

It should be noted that in Case 1 or Case 4, the fourth condition is: The first indication information corresponding to the configuration information of all the CHO candidate primary cells is the private indication information for reserving the configuration information of the LTM candidate primary cell. In Case 2 or Case 5, the fourth condition is: The first indication information that has the mapping relationship with the configuration information of all the CHO candidate primary cell sets is the common indication information for reserving the configuration information of the LTM candidate primary cell. In Case 3 or Case 6, the fourth condition is: The first indication information corresponding to the configuration information of all the CHO candidate primary cells is the private indication information for reserving the configuration information of the LTM candidate primary cell; and the first indication information that has the mapping relationship with the configuration information of all the CHO candidate primary cell sets is the common indication information for reserving the configuration information of the LTM candidate primary cell.

Correspondingly, in Case 1 or Case 4, a policy of "when the fourth condition is met, reserve the configuration information of the LTM candidate primary cell" is: if the first indication information corresponding to the configuration information of all the CHO candidate primary cells is the private indication information for reserving the configuration information of the LTM candidate primary cell, the configuration information of the LTM candidate primary cell is reserved.

In Case 2 or Case 5, a policy of "when the fourth condition is met, reserve the configuration information of the LTM candidate primary cell" is: if the first indication information that has the mapping relationship with the configuration information of all the CHO candidate primary cell sets is the common indication information for reserving the configuration information of the LTM candidate primary cell, the configuration information of the LTM candidate primary cell is reserved.

In Case 3 or Case 6, a policy of "when the fourth condition is met, reserve the configuration information of the LTM candidate primary cell" is: if the first indication information corresponding to the configuration information of all the CHO candidate primary cells is the private indication information for reserving the configuration information of the LTM candidate primary cell; and the first indication information that has the mapping relationship with the configuration information of all the CHO candidate primary cell sets is the common indication information for reserving the configuration information of the LTM candidate primary cell, the configuration information of the LTM candidate primary cell is reserved.

It should be noted that for a reservation operation, the configuration information of the LTM candidate primary cell may be reserved and stored on the terminal device. A specific storage location or path is not limited in this application. In addition, this reservation manner is merely an example, and should not constitute any limitation on this application.

It should be understood that when the "processing policy for the configuration information of the LTM candidate primary cell" may be not related to the CHO target primary cell, the first indication information corresponds to different reservation policies when including different content, to improve flexibility of reserving the configuration information of the LTM candidate primary cell.

The foregoing describes another solution for reserving the configuration information of the LTM candidate primary cell. The following describes another solution for releasing the configuration information of the LTM candidate primary cell.

It should be understood that whether the first indication information includes the release occasion indication information may affect a sequence of performing the CHO primary cell change and releasing the configuration information of the LTM candidate primary cell. Therefore, a case in which whether the first indication information includes the release occasion indication information and another specific solution for releasing the configuration information of the LTM candidate primary cell are described in detail as follows.

Case 1: The first indication information does not include the release occasion indication information.

Correspondingly, when the fifth condition is met, the configuration information of the LTM candidate primary cell is released, and the fifth condition includes at least one of the following conditions:
(1) the CHO primary cell change has been triggered and performed, and first indication information corresponding to configuration information of all CHO candidate primary cells is the private indication information for releasing the configuration information of the LTM candidate primary cell; and
(2) the CHO primary cell change has been triggered and performed, and first indication information that has a mapping relationship with configuration information of all CHO candidate primary cell sets is the common indication information for releasing the configuration information of the LTM candidate primary cell.

It should be understood that Case 1 may include any one or more of Case 1, Case 2, or Case 3. In Case 1, the fifth condition is: The CHO primary cell change has been triggered and performed, and first indication information corresponding to configuration information of all CHO candidate primary cells is the private indication information for releasing the configuration information of the LTM candidate primary cell. In Case 2, the fifth condition is: The CHO primary cell change has been triggered and performed, and first indication information that has a mapping relationship with configuration information of all CHO candidate primary cell sets is the common indication information for releasing the configuration information of the LTM candidate primary cell. In Case 3, the fifth condition is: The CHO primary cell change has been triggered and performed, and first indication information corresponding to configuration information of all CHO candidate primary cells is the private indication information for releasing the configuration information of the LTM candidate primary cell; and the CHO primary cell change has been triggered and performed, and first indication information that has a mapping relationship with configuration information of all CHO candidate primary cell sets is the common indication information for releasing the configuration information of the LTM candidate primary cell.

Correspondingly, in Case 1, a policy of "when the fifth condition is met, release the configuration information of the LTM candidate primary cell" is: if the CHO primary cell change has been triggered and performed, and first indication information corresponding to configuration information of all CHO candidate primary cells is the private indication information for releasing the configuration information of the LTM candidate primary cell, the configuration information of the LTM candidate primary cell is released.

In Case 2, a policy of "when the fifth condition is met, release the configuration information of the LTM candidate primary cell" is: if the CHO primary cell change has been triggered and performed, and first indication information that has a mapping relationship with configuration information of all CHO candidate primary cell sets is the common indication information for releasing the configuration information of the LTM candidate primary cell, the configuration information of the LTM candidate primary cell is released.

In Case 3, a policy of "when the fifth condition is met, release the configuration information of the LTM candidate primary cell" is: if the CHO primary cell change has been triggered and performed, and first indication information corresponding to configuration information of all CHO candidate primary cells is the private indication information for releasing the configuration information of the LTM candidate primary cell; and the CHO primary cell change has been triggered and performed, and first indication information that has a mapping relationship with configuration information of all CHO candidate primary cell sets is the common indication information for releasing the configuration information of the LTM candidate primary cell, the configuration information of the LTM candidate primary cell is released.

It should be noted that for the foregoing release operation, specifically, the configuration information of the LTM candidate primary cell may be deleted when the CHO primary cell change has been triggered and performed, or the configuration information of the LTM candidate primary cell is released in another manner when the CHO primary cell change has been triggered and performed. This is not limited in this application.

Optionally, after the terminal device triggers and performs the CHO primary cell change, the CHO primary cell change may fail to be performed. For a case in which the CHO primary cell change fails to be performed, as described above, details are not described herein again.

It should be understood that in Case 1, different specific content of the first indication information corresponds to different release policies. In the first indication information with different specific content, when "the processing policy for the configuration information of the LTM candidate primary cell" is not related to the CHO target primary cell, the policy for releasing the configuration information of the LTM candidate primary cell is selective.

Case 2: The first indication information includes the release occasion indication information. In Case 2, the unconditional release occasion indication information is used as an example for description.

When the sixth condition is met, the configuration information of the LTM candidate primary cell is released, and the sixth condition includes at least one of the following conditions:
(1) the CHO primary cell change is successfully performed, and first indication information corresponding to configuration information of all CHO candidate primary cells is the private indication information for releasing the configuration information of the LTM candidate primary cell; and
(2) the CHO primary cell change is successfully performed, and first indication information that has a mapping relationship with configuration information of a CHO candidate primary cell set is the common indication information for releasing the configuration information of the LTM candidate primary cell.

It should be understood that Case 2 may include any one or more of Case 4, Case 5, or Case 6. In Case 4, the sixth condition is: The CHO primary cell change is successfully performed, and first indication information corresponding to configuration information of all CHO candidate primary cells is the private indication information for releasing the configuration information of the LTM candidate primary cell. In Case 5, the sixth condition is: The CHO primary cell change is successfully performed, and first indication information that has a mapping relationship with configuration information of a CHO candidate primary cell set is the common indication information for releasing the configuration information of the LTM candidate primary cell. In Case 6, the sixth condition is: The CHO primary cell change is successfully performed, and first indication information corresponding to configuration information of all CHO candidate primary cells is the private indication information for releasing the configuration information of the LTM candidate primary cell; and the CHO primary cell change is successfully performed, and first indication information that has a mapping relationship with configuration information of a CHO candidate primary cell set is the common indication information for releasing the configuration information of the LTM candidate primary cell.

Correspondingly, in Case 4, a policy of "when the sixth condition is met, release the configuration information of the LTM candidate primary cell" is: if the CHO primary cell change is successfully performed, and first indication information corresponding to configuration information of all CHO candidate primary cells is the private indication information for releasing the configuration information of the LTM candidate primary cell, the configuration information of the LTM candidate primary cell is released.

In Case 5, a policy of "when the sixth condition is met, release the configuration information of the LTM candidate primary cell" is: if the CHO primary cell change is successfully performed, and first indication information that has a mapping relationship with configuration information of a CHO candidate primary cell set is the common indication information for releasing the configuration information of the LTM candidate primary cell, the configuration information of the LTM candidate primary cell is released.

In Case 6, a policy of "when the sixth condition is met, release the configuration information of the LTM candidate primary cell" is: if the CHO primary cell change is successfully performed, and first indication information corresponding to configuration information of all CHO candidate primary cells is the private indication information for releasing the configuration information of the LTM candidate primary cell; and the CHO primary cell change is successfully performed, and first indication information that has a mapping relationship with configuration information of a CHO candidate primary cell set is the common indication information for releasing the configuration information of the LTM candidate primary cell, the configuration information of the LTM candidate primary cell is released.

It should be noted that for the foregoing release operation, specifically, the configuration information of the LTM candidate primary cell may be deleted when the CHO primary cell change is successfully performed, or the configuration information of the LTM candidate primary cell is released in another manner when the CHO primary cell change is successfully performed. This is not limited in this application.

Therefore, the "processing policy for the configuration information of the LTM candidate primary cell" may be not related to the CHO target primary cell, and different specific content of the first indication information correspond to different processing policies. In the first indication information with different specific content, when "the processing policy for the configuration information of the LTM candidate primary cell" is not related to the CHO target primary cell, the processing policy for the configuration information of the LTM candidate primary cell is selective.

Therefore, in each case in which the first indication information includes any one or more of the foregoing items, in this embodiment of this application, the processing policy for the configuration information of the LTM candidate primary cell may be determined with reference to one or more items.

In Case 1, the first indication information includes the first reservation indication information and/or the first release indication information, and a policy corresponding to Case 1 may be any one or more of the following:
(1) If the first indication information corresponding to the configuration information of the CHO target primary cell is the first reservation indication information, the configuration information of the LTM candidate primary cell is reserved.
(2) If the CHO primary cell change has been triggered and performed, and the first indication information corresponding to the configuration information of the CHO target primary cell is the first release indication information, when the CHO primary cell change has been triggered and performed, the configuration information of the LTM candidate primary cell is released.
(3) If the first indication information corresponding to the configuration information of all the CHO candidate primary cells is the first reservation indication information, the configuration information of the LTM candidate primary cell is reserved.
(4) If the CHO primary cell change has been triggered and performed, and the first indication information corresponding to the configuration information of all the CHO candidate primary cells is the first release indication information, the configuration information of the LTM candidate primary cell is released.

In other words, after receiving the first indication information, if the terminal device determines the CHO target primary cell to be changed to, the terminal device determines the first indication information corresponding to the configuration information of the CHO target primary cell; and after determining that specific content included in the first indication information is the private indication information, the terminal device reserves or releases the configuration information of the LTM candidate primary cell based on content included in the private indication information. For example, if there are two CHO candidate primary cells: a CHO candidate primary cell A and a CHO candidate primary cell B, where private indication information corresponding to the CHO candidate primary cell A is the first reservation indication information, and private indication information corresponding to the CHO candidate primary cell B is the first release indication information, when the CHO candidate primary cell A is to be changed to, the configuration information of the LTM candidate primary cell may be reserved based on the first reservation indication information corresponding to the CHO candidate primary cell A; or when the CHO candidate primary cell B is to be changed to, the configuration information of the LTM candidate primary cell may be released based on the first release indication information corresponding to the CHO candidate primary cell B; and vice versa.

In Case 2, the first indication information includes the second reservation indication information and/or the second release indication information, and a corresponding policy may be any one or more of the following:
(1) If the first indication information that has the mapping relationship with the configuration information of the set in which the configuration information of the CHO target primary cell is located is the second reservation indication information, the configuration information of the LTM candidate primary cell is reserved.
(2) If the CHO primary cell change has been triggered and performed, and the first indication information that has the mapping relationship with the configuration information of the set in which the configuration information of the CHO target primary cell is located is the second release indication information, when the CHO primary cell change has been triggered and performed, the configuration information of the LTM candidate primary cell is released.
(3) If the first indication information that has the mapping relationship with the configuration information of all the CHO candidate primary cell sets is the second reservation indication information, the configuration information of the LTM candidate primary cell is reserved.
(4) If the CHO primary cell change has been triggered and performed, and the first indication information that has the mapping relationship with the configuration information of all the CHO candidate primary cell sets is the second release indication information, the configuration information of the LTM candidate primary cell is released.

In other words, after receiving the first indication information, if the terminal device determines the CHO target primary cell to be changed to, the terminal device determines the first indication information corresponding to the configuration information of the set in which the configuration information of the CHO target primary cell is located; and after determining that specific content included in the first indication information is the common indication information, the terminal device reserves or releases the configuration information of the LTM candidate primary cell based on specific content of the common indication information.

In Case 3, the first indication information includes the first reservation indication information, the first release indication information, the second reservation indication information, and/or the second release indication information. A policy corresponding to Case 3 may be any one or more of the following:
(1) If the first indication information corresponding to the configuration information of the CHO target primary cell is the first reservation indication information, and the first indication information that has the mapping relationship with the configuration information of the set in which the configuration information of the CHO target primary cell is located is the second reservation indication information, the configuration information of the LTM candidate primary cell is reserved.
(2) If the CHO primary cell change has been triggered and performed, and the first indication information corresponding to the configuration information of the CHO target primary cell is the first release indication information; and the CHO primary cell change has been triggered and performed, and the first indication information that has the mapping relationship with the configuration information of the set in which the configuration information of the CHO target primary cell is located is the second release indication information, when the CHO primary cell change has been triggered and performed, the configuration information of the LTM candidate primary cell is released.
(3) If the first indication information corresponding to the configuration information of all the CHO candidate primary cells is the first reservation indication information, and the first indication information that has the mapping relationship with the configuration information of all the CHO candidate primary cell sets is the second reservation indication information, the configuration information of the LTM candidate primary cell is reserved.
(4) If the CHO primary cell change has been triggered and performed, and the first indication information corresponding to the configuration information of all the CHO candidate primary cells is the first release indication information; and the CHO primary cell change has been triggered and performed, and the first indication information that has the mapping relationship with the configuration information of the CHO candidate primary cell set is the second release indication information, when the CHO primary cell change has been triggered and performed, the configuration information of the LTM candidate primary cell is released.

It should be understood that Case 1, Case 2, or Case 3 above corresponds to a case in which the unconditional release occasion indication information is not included, and Case 4, Case 5, or Case 6 below corresponds to a case in which the unconditional release occasion indication information is included.

In Case 4, the specific content of the first indication information includes the release occasion indication information and the first release indication information, and may further include the first reservation indication information. A policy corresponding to Case 4 may be any one or more of the following:
(1) If the first indication information corresponding to the configuration information of the CHO target primary cell is the first reservation indication information, the configuration information of the LTM candidate primary cell is reserved.
(2) If the CHO primary cell change has been successfully performed, and the first indication information corresponding to the configuration information of the CHO target primary cell is the first release indication information, after the CHO primary cell change has been successfully performed, the configuration information of the LTM candidate primary cell is released.
(3) If the first indication information corresponding to the configuration information of all the CHO candidate primary cells is the first reservation indication information, the configuration information of the LTM candidate primary cell is reserved.
(4) If the CHO primary cell change has been successfully performed, and the first indication information corresponding to the configuration information of all the CHO candidate primary cells is the first release indication information, the configuration information of the LTM candidate primary cell is released.

In Case 5, the first indication information includes the release occasion indication information and the second release indication information, and may further include the second reservation indication information. A policy corresponding to Case 5 may be any one or more of the following:
(1) If the first indication information that has the mapping relationship with the configuration information of the set in which the configuration information of the CHO target primary cell is located is the second reservation indication information, the configuration information of the LTM candidate primary cell is reserved.
(2) If the CHO primary cell change has been successfully performed, and the first indication information that has the mapping relationship with the configuration information of the set in which the configuration information of the CHO target primary cell is located is the second release indication information, after the CHO primary cell change has been successfully performed, the configuration information of the LTM candidate primary cell is released.
(3) If the first indication information that has the mapping relationship with the configuration information of all the CHO candidate primary cell sets is the second reservation indication information, the configuration information of the LTM candidate primary cell is reserved.
(4) If the CHO primary cell change has been successfully performed, and the first indication information that has the mapping relationship with the configuration information of the CHO candidate primary cell set is the second release indication information, the configuration information of the LTM candidate primary cell is released.

In Case 6, the first indication information includes the release occasion indication information, the first release indication information, and the second release indication information, and may further include the first reservation indication information or the second reservation indication information. A policy corresponding to Case 6 may be any one or more of the following:
(1) If the first indication information corresponding to the configuration information of the CHO target primary cell is the first reservation indication information, and the first indication information that has the mapping relationship with the configuration information of the set in which the configuration information of the CHO target primary cell is located is the second reservation indication information, the configuration information of the LTM candidate primary cell is reserved.
(2) If the CHO primary cell change has been successfully performed, and the first indication information corresponding to the configuration information of the CHO target primary cell is the first release indication information; and the CHO primary cell change has been successfully performed, and the first indication information that has the mapping relationship with the configuration information of the set in which the configuration information of the CHO target primary cell is located is the second release indication information, after the CHO primary cell change has been successfully performed, the configuration information of the LTM candidate primary cell is released.
(3) If the first indication information corresponding to the configuration information of all the CHO candidate primary cells is the first reservation indication information, and the first indication information that has the mapping relationship with the configuration information of all the CHO candidate primary cell sets is the second reservation indication information, the configuration information of the LTM candidate primary cell is reserved.
(4) If the CHO primary cell change has been successfully performed, and the first indication information corresponding to the configuration information of all the CHO candidate primary cells is the first release indication information; and the CHO primary cell change has been successfully performed, and the first indication information that has the mapping relationship with the configuration information of the CHO candidate primary cell set is the second release indication information, the configuration information of the LTM candidate primary cell is released.

Therefore, different specific content of the first indication information correspond to different processing policies. In the first indication information with different specific content, the processing policy for the configuration information of the LTM candidate primary cell is selective. In addition, the first indication information with same content may correspond to one or more reservation policies, or one or more release policies, so that when the first indication information includes the same content, processing of the configuration information of the LTM candidate primary cell is more flexible.

It should also be understood that different types of release occasion indication information affect the processing policies corresponding to the cases (for example, Case 4, Case 5, or Case 6) in which the first indication information includes the release occasion indication information. Therefore, the following uses the conditional release occasion indication information as an example to describe a processing policy corresponding to each case.

In Case 4, the content of the first indication information includes the release occasion indication information and the first release indication information. If a part of the first release indication information is associated with the release occasion indication information, and a part of the first release indication information is not associated with the release occasion indication information, a corresponding processing policy may be as follows: If the CHO primary cell change occurs, and the CHO target primary cell is a CHO candidate primary cell corresponding to the first release indication information associated with the release occasion indication information, after the CHO primary cell change is successfully completed, the configuration information of the LTM candidate primary cell is released; or if the CHO primary cell change occurs, and the CHO target primary cell is a CHO candidate primary cell corresponding to the first release indication information not associated with the release occasion indication information, after the CHO primary cell change has been triggered, the configuration information of the LTM candidate primary cell is released.

In Case 5, if the content of the first indication information includes the release occasion indication information and the second release indication information, and the release occasion indication information is associated with the second release indication information, a corresponding processing policy may be as follows: If the CHO primary cell change occurs, and the configuration information of the set in which the configuration information of the CHO target primary cell is located is configuration information of a CHO candidate primary cell set corresponding to the second release indication information associated with the release occasion indication information, after the CHO primary cell is successfully changed, the configuration information of the LTM candidate primary cell is released.

In Case 6, the content of the first indication information includes the release occasion indication information, the first release indication information, and the second release indication information. If a part of the first release indication information is associated with the release occasion indication information, a part of the first release indication information is not associated with the release occasion indication information, and a part of the release occasion indication information is associated with the second release indication information, a corresponding processing policy may be as follows:
(1) If the CHO primary cell change occurs, and the CHO target primary cell is a CHO candidate primary cell corresponding to the first release indication information associated with the release occasion indication information; and the configuration information of the set in which the configuration information of the CHO target primary cell is located is configuration information of a CHO candidate primary cell set corresponding to the second release indication information associated with the release occasion indication information, after the CHO primary cell change is successfully completed, the configuration information of the LTM candidate primary cell is released.
(2) On the contrary, if the CHO primary cell change occurs, and the CHO target primary cell is not a CHO candidate primary cell corresponding to the first release indication information associated with the release occasion indication information; or the configuration information of the set in which the configuration information of the CHO target primary cell is located is not configuration information of a CHO candidate primary cell set corresponding to the second release indication information associated with the release occasion indication information, after the CHO primary cell change has been triggered, the configuration information of the LTM candidate primary cell is released.

Therefore, on the basis that different specific content of the first indication information correspond to different processing policies, different release occasion indication information also corresponds to different processing policies, so that when the first indication information includes the release occasion indication information, processing of the configuration information of the LTM candidate primary cell is more flexible.

It should be noted that in addition to the foregoing six cases, in this embodiment, other cases and corresponding processing policies may be further provided below.

Case 7: The first indication information includes the release occasion indication information.

It should be understood that in Case 7, if the specific content of the first indication information is the release occasion indication information, a corresponding processing policy is as follows: After the CHO primary cell change has been successfully completed, the configuration information of the LTM candidate primary cell is released.

In Case 7, when determining to perform the CHO primary cell change, the terminal device may automatically release, according to the corresponding processing policy, the configuration information of the LTM candidate primary cell after the CHO primary cell replacement has been successfully completed, and the configuration information of the LTM candidate primary cell is not released before the CHO primary cell change has been successfully completed, to avoid a phenomenon that normal change cannot be performed when the handover manner is changed after the CHO primary cell change fails, and improve comprehensiveness and selectivity of the content of the first indication information, thereby further improving comprehensiveness and selectivity of the processing policy.

In Solution 1 in this embodiment of this application, in addition to describing different processing policies corresponding to the foregoing different cases, whether the processing policy has persistence may be further described as follows:

The first indication information further includes: fourth indication information, and the fourth indication information indicates to reserve or release the first indication information.

It should be understood that a specific representation form of the "fourth indication information" may be a field representing "reserving or releasing the first indication information", or may be indication information such as an identifier, an index, or a number representing "reserving or releasing the first indication information". This is not limited in this application.

Optionally, after reserving or releasing the configuration information of the LTM candidate primary cell based on the first indication information, the method further includes any one of the following:
if the fourth indication information indicates to reserve the first indication information, reserving the first indication information, to reserve or release, based on the first indication information, the configuration information of the LTM candidate primary cell that is reconfigured by the original primary cell network device; or
if the fourth indication information indicates to release the first indication information, releasing the first indication information, and re-receiving the first indication information sent by the original primary cell network device, to reserve or release, based on the re-received first indication information, the configuration information of the LTM candidate primary cell that is reconfigured by the original primary cell network device.

It should be understood that in Solution 1, the first indication information includes at least one of the following information: the private indication information, the common indication information, or the release occasion indication information. Therefore, the fourth indication information may be further refined, to be specific, the fourth indication information includes at least one of the following: indication information for releasing or reserving the private indication information, indication information for releasing or reserving common indication information, or indication information for releasing or reserving the release occasion indication information.

Specifically, in Case 1, the fourth indication information may include the indication information for releasing or reserving the private indication information. In Case 2, the fourth indication information may include the indication information for releasing or reserving the common indication information. In Case 3, the fourth indication information may include the indication information for releasing or reserving the private indication information, and the indication information for releasing or reserving the common indication information. In Case 4, the fourth indication information may include the indication information for releasing or reserving the private indication information, and the indication information for releasing or reserving the release occasion indication information. In Case 5, the fourth indication information may include the indication information for releasing or reserving the common indication information, and the indication information for releasing or reserving the release occasion indication information. In Case 6, the fourth indication information may include the indication information for releasing or reserving the private indication information, the indication information for releasing or reserving the common indication information, and the indication information for releasing or reserving the release occasion indication information. In Case 7, the fourth indication information may include the indication information for releasing or reserving the release occasion indication information.

Therefore, content of the fourth indication information is different in different cases. It should be understood that the content of the fourth indication information is not specifically limited in this embodiment of this application. In this embodiment of this application, for a manner of indicating that each item in the first indication information is reserved or released, a processing policy can be adjusted after the configuration information of the LTM candidate primary cell is reserved or released based on the first indication information. Further, when the configuration information of the LTM candidate primary cell is subsequently processed, processing may be performed according to an adjusted processing policy, so that a processing manner is selective.

It should be understood that after this processing, the original primary cell network device may send the configuration information of the reconfigured LTM candidate primary cell, and the configuration information of the reconfigured LTM candidate primary cell is the configuration information of the LTM candidate primary cell sent by the original primary cell network device after the original primary cell network device sends the first indication information. For brevity of description, in this embodiment of this application, for Case 1 and Case 2, a subsequent processing solution for reserving or releasing the configuration information of the reconfigured LTM candidate primary cell based on the fourth indication information is described.

In Case 1, if the fourth indication information indicates to reserve the private indication information, the private indication information is reserved, to reserve or release the configuration information of the reconfigured LTM candidate primary cell based on the private indication information; or if the fourth indication information indicates to release the private indication information, the first indication information sent by the original primary cell network device is re-received, to reserve or release the configuration information of the reconfigured LTM candidate primary cell based on the re-received first indication information.

In Case 2, if the fourth indication information indicates to reserve the common indication information, the common indication information is reserved, to reserve or release the configuration information of the reconfigured LTM candidate primary cell based on the common indication information; or if the fourth indication information indicates to release the common indication information, the first indication information sent by the original primary cell network device is re-received, to reserve or release the configuration information of the reconfigured LTM candidate primary cell based on the re-received first indication information.

In another case, a subsequent processing solution in which the configuration information of the reconfigured LTM candidate primary cell is reserved or released based on the fourth indication information is described in a manner similar to that in the foregoing cases. Details are not described in this embodiment of this application.

In other words, the first indication information can not only indicate the processing policy for the configuration information of the LTM candidate primary cell, but also indicate whether the configuration information of the LTM candidate primary cell subsequently reconfigured by the original primary cell network device can be processed according to the processing policy. When the fourth indication information indicates to reserve the first indication information, a waste of communication resources caused by subsequent continuous sending of the first indication information by the original primary cell network device can be avoided. When the fourth indication information indicates to release the first indication information, the processing policy can be adjusted in a manner of resending the first indication information by the original primary cell network device in a subsequent procedure, to properly process the configuration information of the LTM candidate primary cell. The foregoing describes the first indication information when the device controlling the processing manner is the original primary cell network device, and a specific solution for reserving or releasing the configuration information of the LTM candidate primary cell based on the first indication information.

As described above, information included in the first indication information is also different based on different devices controlling the processing manner, and specific solutions for reserving or releasing the configuration information of the LTM candidate primary cell based on the first indication information are also different. Therefore, the following describes the first indication information when the device controlling the processing manner is the terminal device, and a specific solution for reserving or releasing the configuration information of the LTM candidate primary cell based on the first indication information.

### Solution 2:

When the device controlling the processing manner is the terminal device, the first indication information includes the following information: indication information indicating that the terminal device autonomously reserves or releases the configuration information of the LTM candidate primary cell.

It should be understood that a specific representation form of the foregoing "indication information indicating that the terminal device autonomously reserves or releases the configuration information of the LTM candidate primary cell" may be a field of "autonomous processing", for example, a field "autonomous processing", or may be indication information such as an identifier, an index, or a number that represents "autonomous processing". For example, a digit number 12 represents "autonomous processing". This is not limited in this application. In addition, a representation form of the "the configuration information of the LTM candidate primary cell" may be a name, a number, or another form of the LTM candidate primary cell.

In other words, the original primary cell network device sends the indication information indicating that the terminal device autonomously reserves or releases the configuration information of the LTM candidate primary cell, and the terminal device may autonomously determine to reserve or release the configuration information of the LTM candidate primary cell when the CHO primary cell change occurs. Specifically, if the information autonomously determined by the terminal device indicates that the autonomous processing manner is the reservation manner, the configuration information of the LTM candidate primary cell is reserve when the CHO primary cell change occurs. If the information autonomously determined by the terminal device indicates that the autonomous processing manner is the release manner, the terminal device releases the configuration information of the LTM candidate primary cell when the CHO primary cell change occurs.

It should be understood that in this embodiment of this application, a specific implementation of how the terminal device autonomously determines to reserve or release the configuration information of the LTM candidate primary cell when the CHO primary cell change occurs is not specifically limited.

In an example, after receiving the RRC reconfiguration information sent by the original primary cell network device, the terminal device performs CHO evaluation based on the configuration information of the CHO candidate primary cell and the execution condition that are carried in the RRC reconfiguration information. After receiving the first indication information, the terminal device obtains the indication information indicating that the terminal device autonomously reserves or releases the configuration information of the LTM candidate primary cell; and when it is evaluated that there is a CHO candidate primary cell that meets the corresponding execution condition, determines that the CHO primary cell change occurs, determines the CHO target primary cell, and determines, based on the configuration information of the LTM candidate primary cell carried in the RRC reconfiguration information, whether there is a CHO target primary cell in the LTM candidate primary cell. If there is no CHO target primary cell in the LTM candidate primary cell, when the CHO primary cell change has been triggered, the configuration information of the LTM candidate primary cell is released; or when the release occasion indication information is predefined on the terminal device, the configuration information of the LTM candidate primary cell is released when the CHO primary cell change has been successfully performed.

Alternatively, if there is the CHO target primary cell in the LTM candidate primary cell, the configuration information of the LTM candidate primary cell is reserved; or if there is the CHO target primary cell in the LTM candidate primary cell, the configuration information, of the LTM candidate primary cell, corresponding to the LTM candidate primary cell that is the CHO target primary cell is reserved, and the configuration information, of the LTM candidate primary cell, corresponding to the LTM candidate primary cell that is not the CHO target primary cell is released.

Therefore, the terminal device may autonomously determine an operation to be performed on the configuration information of the LTM candidate primary cell when the CHO primary cell change occurs, thereby improving selectivity of the method for processing configuration information of a candidate primary cell.

Optionally, after reserving or releasing the configuration information of the LTM candidate primary cell based on the first indication information, the target primary cell network device sends third indication information, where the third indication information indicates that the terminal device has reserved or released the configuration information of the LTM candidate primary cell.

It should be understood that a specific representation form of the "third indication information" may be a field representing "the terminal device has reserved or released the configuration information of the LTM candidate primary cell", where for example, the field "reserved" is a field representing "the terminal device has reserved the configuration information of the LTM candidate primary cell", or the field "released" is a field representing "the terminal device has released the configuration information of the LTM candidate primary cell"; or may be indication information such as an identifier, an index, or a number that represents "reserved or released". For example, a digit number 31 represents that the configuration information of the LTM candidate primary cell has been reserved, and a digit number 32 represents that the configuration information of the LTM candidate primary cell has been released; or 31B represents that the configuration information of the LTM candidate primary cell has been reserved in Solution 2, and a digit number 32B represents that the configuration information of the LTM candidate primary cell has been released in Solution 2. This is not limited in this application.

It should also be understood that in the autonomous processing manner, the terminal device sends the third indication information to the target primary cell network device, so that the target primary cell network device determines whether to reconfigure the LTM candidate primary cell for the terminal device. If the LTM candidate primary cell is reconfigured for the terminal device, timeliness of subsequently receiving the configuration information of the LTM candidate primary cell by the terminal device can be improved. If it is determined that the LTM candidate primary cell does not need to be reconfigured for the terminal device, a waste of communication resources can be avoided.

In Solution 2 in this embodiment of this application, in addition to describing the autonomous processing policy, whether the autonomous processing policy has persistence may be further described as follows:

The first indication information further includes: fourth indication information, and the fourth indication information indicates to reserve or release the first indication information.

It should be understood that a specific representation form of the "fourth indication information" may be a field representing "reserving or releasing the first indication information", or may be indication information such as an identifier, an index, or a number representing "reserving or releasing the first indication information". This is not limited in this application.

In other words, the first indication information can not only indicate the processing policy for the configuration information of the LTM candidate primary cell, but also indicate whether the configuration information of the LTM candidate primary cell subsequently reconfigured by the original primary cell network device can be processed according to the processing policy. Therefore, whether the processing policy can be continuously used as a basis for subsequent processing is selective.

Optionally, after reserving or releasing the configuration information of the LTM candidate primary cell based on the first indication information, the method further includes any one of the following:
if the fourth indication information indicates to reserve the first indication information, reserving the first indication information indicating a policy of autonomously processing the configuration information of the LTM candidate primary cell, to reserve or release, according to a policy of autonomously processing the configuration information of the LTM candidate primary cell, the configuration information of the LTM candidate primary cell that is reconfigured by the original primary cell network device; or
if the fourth indication information indicates to release the first indication information, releasing the first indication information indicating a policy of autonomously processing the configuration information of the LTM candidate primary cell, and re-receiving the first indication information sent by the original primary cell network device, to reserve or release, based on the re-received first indication information, the configuration information of the LTM candidate primary cell that is reconfigured by the original primary cell network device. It should be understood that the re-received first indication information may indicate that the policy in Solution 1 is included. Therefore, adjustment of the processing policy can be implemented.

Therefore, in a manner of reserving the first indication information, a waste of communication resources caused by subsequent continuous sending of the first indication information by the original primary cell network device can be avoided. A manner of releasing the first indication information may facilitate adjustment of the processing policy. Further, when the configuration information of the LTM candidate primary cell is subsequently processed, processing may be performed according to an adjusted processing policy, so that the processing manner is selective.

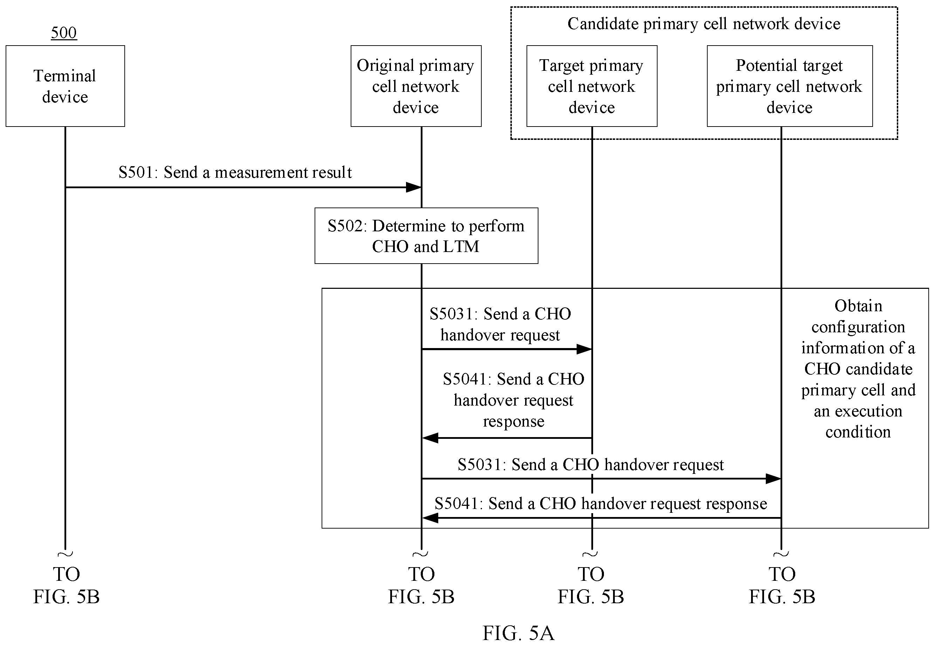

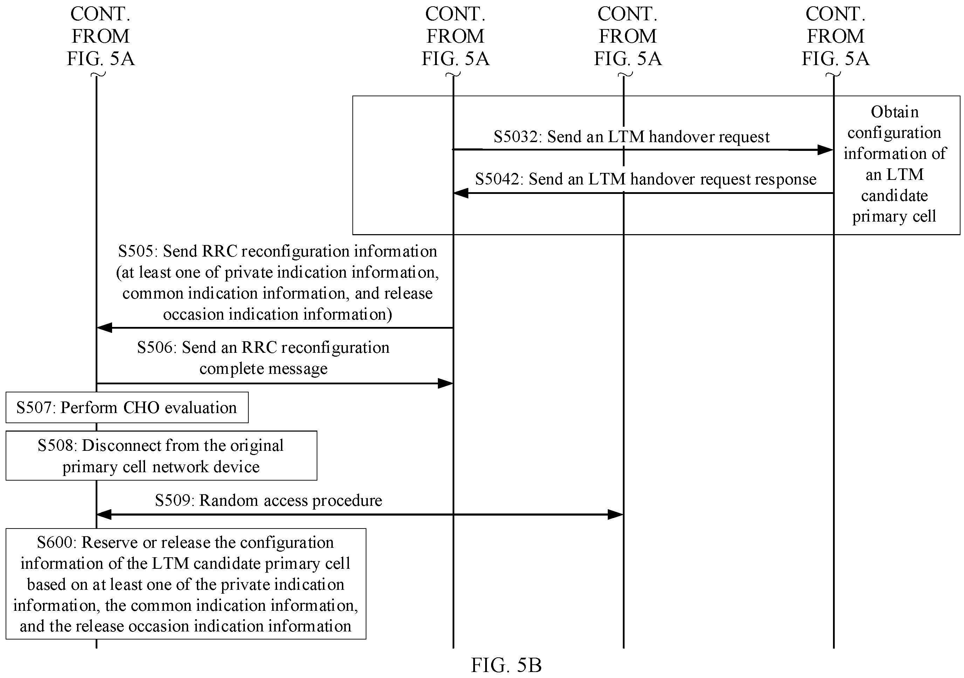

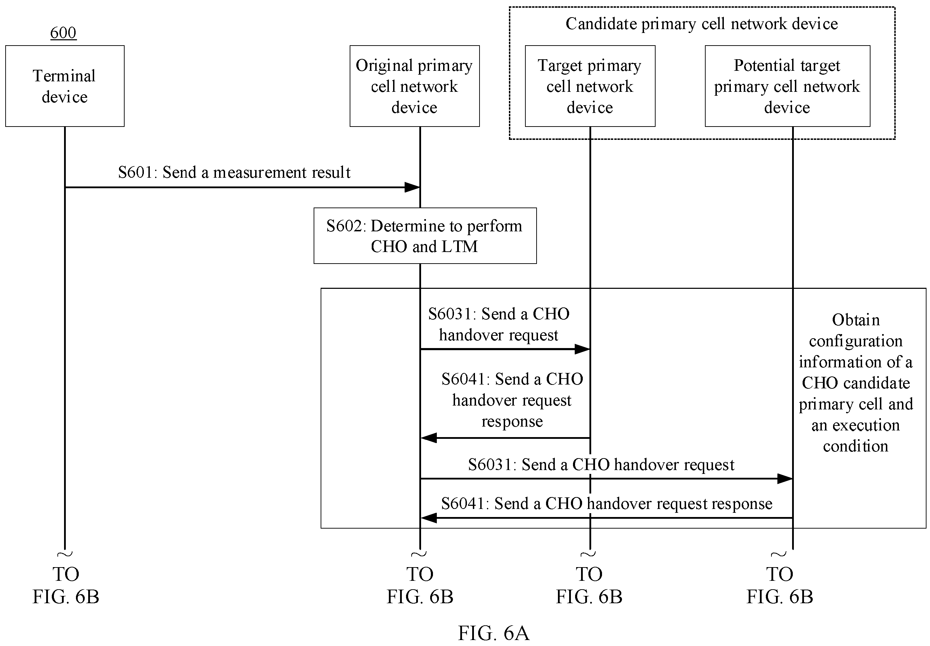

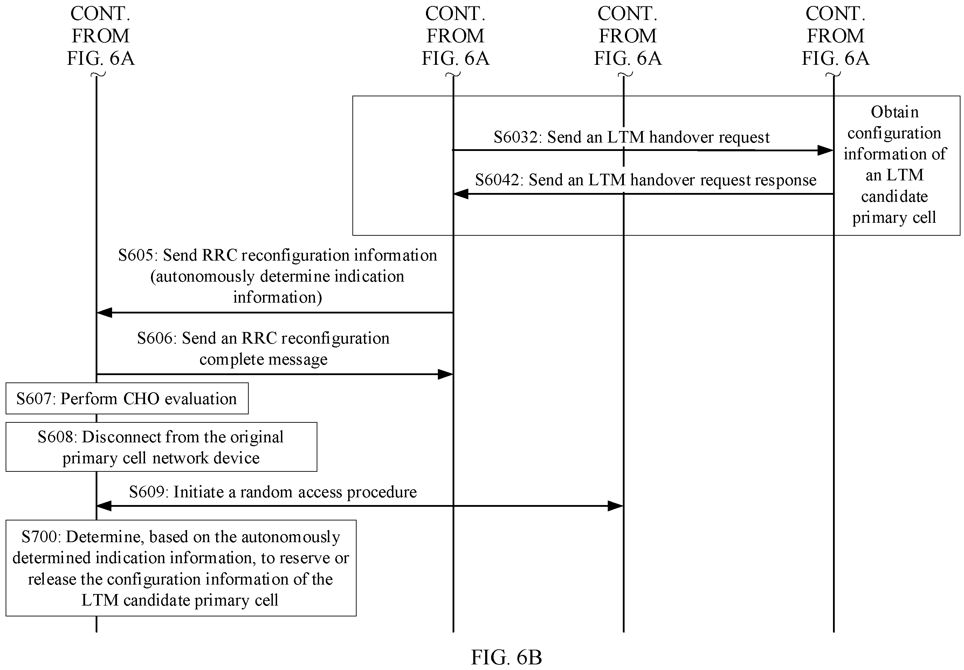

Refer to FIG. 5A and FIG. 5B and FIG. 6A and FIG. 6B. The following separately describes in detail, in a manner of signaling exchange between devices, a processing solution for configuration information of a candidate primary cell when a device controlling a processing manner is an original primary cell network device or a terminal device.

FIG. 5A and FIG. 5B are a diagram of signaling exchange between a terminal device and each network device when a CHO primary cell change occurs and a decision is made by an original primary cell network device in a method 500 for processing configuration information of a candidate primary cell according to an embodiment of this application from a perspective of device interaction. With reference to FIG. 5A and FIG. 5B, the following describes embodiments of this application.

S501: A terminal device sends a measurement result to an original primary cell network device.

It should be understood that whether the terminal device is in a single-connectivity state or a dual-connectivity state is not specifically limited in this embodiment of this application.

S502: The original primary cell network device determines to perform CHO and LTM.

It should be understood that after receiving the measurement result, the original primary cell network device determines, based on the measurement result, whether to perform CHO and whether to perform LTM; and when a corresponding decision condition is met, determines to perform CHO and LTM.

It should also be understood that in one example, the candidate primary cell may be only a CHO candidate primary cell; in another example, the candidate primary cell may be only an LTM candidate primary cell; and in still another example, the candidate primary cell may be both an LTM candidate primary cell and a CHO candidate primary cell. This is not specifically limited in this embodiment.

In this embodiment, an example in which a target primary cell is only a CHO candidate primary cell, and a potential target primary cell is both an LTM candidate primary cell and a CHO candidate primary cell is used for description as follows:

For a target primary cell network device, S5031 and S5041 are performed in this embodiment of this application; and for a potential target primary cell network device, S5031 and S5041, and S5032 and S5042 are performed.

S5031: The original primary cell network device sends a CHO handover request to a candidate primary cell network device.

A candidate primary cell includes a target primary cell and a potential target primary cell.

S5041: The candidate primary cell network device sends a CHO handover request response to the original primary cell network device.

In S5041, the original primary cell network device obtains configuration information of a CHO candidate primary cell and an execution condition.

It should be understood that the execution condition is a CHO execution condition, and the CHO execution condition may be any one of an event A3, an event A4, and an event A5; or may be any two of an event A3, an event A4, and an event A5; or may be an event A3, an event A4, or an event A5. The event A3 indicates that quality of a neighboring cell is better than that of an original cell. Occurrence of this event triggers handover. The event A4 indicates that quality of a neighboring cell is greater than an absolute threshold. Occurrence of this event triggers handover. The event A5 indicates that quality of an original cell is less than an absolute threshold and quality of a neighboring cell is greater than an absolute threshold. Occurrence of this event triggers handover.

S5032: The original primary cell network device sends an LTM handover request to the potential target primary cell network device.

S5042: The potential target primary cell network device sends an LTM handover request response to the original primary cell network device.

In S5042, the original primary cell network device obtains configuration information of an LTM candidate primary cell. For specific descriptions of S5032 and S5042, refer to related technologies. Details are not described herein again.

S505: The original primary cell network device sends RRC reconfiguration information to the terminal device.

It should be understood that the RRC reconfiguration information is also referred to as an RRC reconfiguration message. The RRC reconfiguration information may include the configuration information of the LTM candidate primary cell, the configuration information of the CHO candidate primary cell, and the execution condition.

It should be further understood that the RRC reconfiguration information may further include at least one of private indication information, common indication information, and release occasion indication information. Any of the foregoing indication information indicates a processing policy for the configuration information of the LTM candidate primary cell when the CHO primary cell change occurs for the terminal device. For related descriptions of the private indication information, the common indication information, and the release occasion indication information, refer to the foregoing descriptions. Details are not described herein again.

Therefore, in S505, at least one of the private indication information, the common indication information, and the release occasion indication information, the configuration information of the LTM candidate primary cell, the configuration information of the CHO candidate primary cell, and the execution condition are sent to the terminal device.

S506: The terminal device sends an RRC reconfiguration complete message to the original primary cell network device.

S507: The terminal device performs CHO evaluation.

It should be understood that the terminal device performs CHO evaluation based on the configuration information of the CHO candidate primary cell and the execution condition, to determine the target primary cell.

S508: The terminal device disconnects from the original primary cell network device.

S509: The terminal device initiates a random access procedure to the target primary cell network device.

S600: The terminal device reserves or releases the configuration information of the LTM candidate primary cell based on at least one of the private indication information, the common indication information, and the release occasion indication information.

It should be understood that if the first indication information includes the release occasion indication information and private indication information corresponding to the CHO candidate primary cell, and if the CHO primary cell change is triggered, and private indication information corresponding to a CHO target primary cell to be changed to is first release indication information, when the CHO primary cell change fails to be performed, the first release indication information is ignored, and the private indication information corresponding to the CHO target primary cell that has been successfully changed to is released after the CHO primary cell change is completed.

It should be noted that a specific execution solution for reserving or releasing the configuration information of the LTM candidate primary cell in this embodiment is similar to the specific execution solution when the device controlling the processing manner is the original primary cell network device in Solution 1 above. Details are not described herein again.

FIG. 6A and FIG. 6B are a diagram of signaling exchange between a terminal device and each network device when a CHO primary cell change occurs and a decision is made by a terminal device in a method 600 for processing configuration information of a candidate primary cell according to an embodiment of this application from a perspective of device interaction. With reference to FIG. 6A and FIG. 6B, the following describes embodiments of this application.

S601: A terminal device sends a measurement result to an original primary cell network device.

It should be understood that whether the terminal device is in a single-connectivity state or a dual-connectivity state is not specifically limited in this embodiment of this application.

S602: The original primary cell network device determines to perform CHO and LTM.

It should be understood that after receiving the measurement result, the original primary cell network device determines, based on the measurement result, whether to perform CHO and whether to perform LTM; and when a corresponding decision condition is met, determines to perform CHO and LTM.

It should also be understood that in one example, the candidate primary cell may be only a CHO candidate primary cell; in another example, the candidate primary cell may be only an LTM candidate primary cell; and in still another example, the candidate primary cell may be both an LTM candidate primary cell and a CHO candidate primary cell. This is not specifically limited in this embodiment.

In this embodiment, an example in which a target primary cell is only a CHO candidate primary cell, and a potential target primary cell is both an LTM candidate primary cell and a CHO candidate primary cell is used for description as follows:

For a target primary cell network device, S6031 and S6041 are performed in this embodiment of this application; and for a potential target primary cell network device, S6031 and S6041, and S6032 and S6042 are performed.

S6031: The original primary cell network device sends a CHO handover request to a candidate primary cell network device.

A candidate primary cell includes a target primary cell and a potential target primary cell.

S6041: The candidate primary cell network device sends a CHO handover request response to the original primary cell network device.

In S6041, the original primary cell network device obtains configuration information of a CHO candidate primary cell and an execution condition.

It should be understood that the execution condition is a CHO execution condition, and the CHO execution condition may be any one of an event A3, an event A4, and an event A5; or may be any two of an event A3, an event A4, and an event A5; or may be an event A3, an event A4, or an event A5. The event A3 indicates that quality of a neighboring cell is better than that of an original cell. Occurrence of this event triggers handover. The event A4 indicates that quality of a neighboring cell is greater than an absolute threshold. Occurrence of this event triggers handover. The event A5 indicates that quality of an original cell is less than an absolute threshold and quality of a neighboring cell is greater than an absolute threshold. Occurrence of this event triggers handover.

S6032: The original primary cell network device sends an LTM handover request to the potential target primary cell network device.

S6042: The potential target primary cell network device sends an LTM handover request response to the original primary cell network device.

In S6042, the original primary cell network device obtains configuration information of an LTM candidate primary cell. For specific descriptions of S6032 and S6042, refer to related technologies. Details are not described herein again.

S605: The original primary cell network device sends RRC reconfiguration information to the terminal device.

It should be understood that the RRC reconfiguration information is also referred to as an RRC reconfiguration message. The RRC reconfiguration information may include the configuration information of the LTM candidate primary cell, the configuration information of the CHO candidate primary cell, and the execution condition.

It should also be understood that the RRC reconfiguration information may further include autonomous determining indication information, and the autonomous determining indication information is short for indication information indicating that the terminal device autonomously reserves or releases the configuration information of the LTM candidate primary cell. For related descriptions of the indication information indicating that the terminal device autonomously reserves or releases the configuration information of the LTM candidate primary cell, refer to the foregoing descriptions. Details are not described herein again.

Therefore, in S605, the autonomous determining indication information, the configuration information of the LTM candidate primary cell, the configuration information of the CHO candidate primary cell, and the execution condition are sent to the terminal device.

S606: The terminal device sends an RRC reconfiguration complete message to the original primary cell network device.

S607: The terminal device performs CHO evaluation.

It should be understood that the terminal device performs CHO evaluation based on the configuration information of the CHO candidate primary cell and the execution condition, to determine the target primary cell.

S608: The terminal device disconnects from the original primary cell network device.

S609: The terminal device initiates a random access procedure to the target primary cell network device.

S700: The terminal device reserves or releases the configuration information of the LTM candidate primary cell based on the autonomous determining indication information.

It should be noted that a specific execution solution for reserving or releasing the configuration information of the LTM candidate primary cell in this embodiment is similar to the specific execution solution when the device controlling the processing manner is the terminal device in Solution 2 above. Details are not described herein again.

It should be understood that in the foregoing two embodiments, effective management of the LTM configuration information is implemented when the CHO primary cell change occurs for the terminal device. If LTM handover occurs on the terminal device, effective management of the CHO configuration information and the execution condition can also be implemented in this embodiment. The solution descriptions are similar to those in embodiments of this application. Details are not described in this embodiment.

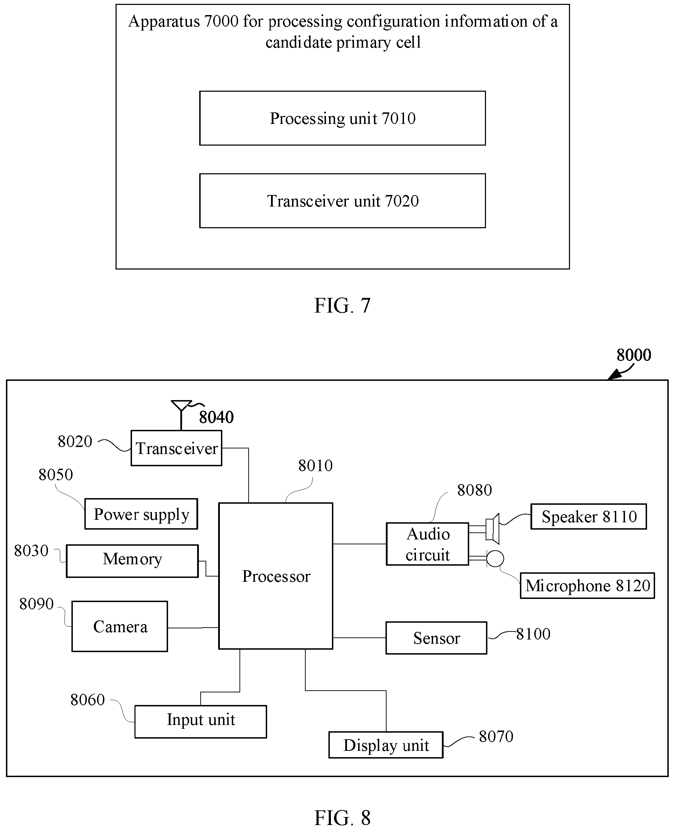

The foregoing describes in detail the methods provided in embodiments of this application with reference to FIG. 4 to FIG. 6A and FIG. 6B. The following describes in detail an apparatus provided in embodiments of this application with reference to FIG. 7.

FIG. 7 is a block diagram of an apparatus 7000 for processing configuration information of a candidate primary cell according to an embodiment of this application. As shown in FIG. 7, the apparatus 7000 for processing configuration information of a candidate primary cell may include a processing unit 7010 and a transceiver unit 7020.

In a possible design, the apparatus 7000 for processing configuration information of a candidate primary cell may implement an operation corresponding to the terminal device in the foregoing method embodiments. For example, the apparatus for processing configuration information of a candidate primary cell may be a terminal device or a component, for example, a chip or a circuit, configured in the terminal device.

The apparatus 7000 for processing configuration information of a candidate primary cell may implement corresponding operations of the terminal device in the method embodiments shown in FIG. 4 to FIG. 6A and FIG. 6B. For example, the transceiver unit 7020 may be configured to perform S410 in the method 400, and the processing unit 7010 may be configured to perform S420 in the method 400. In addition, the units in the apparatus 7000 for processing configuration information of a candidate primary cell and the foregoing other operations and/or functions are respectively used to implement corresponding procedures in the method embodiment shown in FIG. 4.

Specifically, when the apparatus 7000 for processing configuration information of a candidate primary cell is configured to perform the method 400 in FIG. 4, the transceiver unit 7020 may be configured to receive first indication information sent by an original primary cell network device, where the first indication information indicates a processing policy for configuration information of a layer 1/2 triggered mobility LTM candidate primary cell when a CHO primary cell change occurs for the terminal device; and the processing unit 7010 may be configured to: when the CHO primary cell change occurs, reserve or release the configuration information of the LTM candidate primary cell based on the first indication information. The transceiver unit 7020 may be further configured to communicate with the original primary cell network device. The original primary cell network device is a network device to which an original primary cell belongs.

In another possible design, the apparatus 7000 for processing configuration information of a candidate primary cell may implement an operation corresponding to the original primary cell network device in the foregoing method embodiments. For example, the apparatus for processing configuration information of a candidate primary cell may be an original primary cell network device or a component, for example, a chip or a circuit, configured in the original primary cell network device.

The apparatus 7000 for processing configuration information of a candidate primary cell may implement corresponding operations of the original primary cell network device in the method embodiment shown in FIG. 4. For example, the transceiver unit 7020 may be configured to perform S410 in the method 400. In addition, the units in the apparatus 7000 for processing configuration information of a candidate primary cell and the foregoing other operations and/or functions are respectively used to implement corresponding procedures in the method embodiment shown in FIG. 4.

Specifically, when the apparatus 7000 for processing configuration information of a candidate primary cell is configured to perform the method 400 in FIG. 4, the transceiver unit 7020 may be configured to send first indication information to a terminal device, where the first indication information indicates a processing policy for configuration information of a layer 1/2 triggered mobility LTM candidate primary cell when a CHO primary cell change occurs for the terminal device.

It should be understood that a specific process in which the units perform the foregoing corresponding steps is described in detail in the foregoing method embodiments. For brevity, details are not described herein.

It should also be understood that in embodiments of this application, division into modules is an example, and is merely logical function division. During actual implementation, there may be another division manner. In addition, functional modules in embodiments of this application may be integrated into one processor, each module may exist alone physically, or two or more modules may be integrated into one module. The foregoing integrated module may be implemented in a form of hardware, or may be implemented in a form of a software functional module.

It should be understood that the apparatus 7000 for processing configuration information of a candidate primary cell may correspond to the terminal device 110 or the original primary cell network device 120 in the communication system 100 shown in FIG. 1. The terminal device 110 may be an example of the terminal device, and the original primary cell network device 120 may be an example of the primary cell network device. The processing unit 7010 in the apparatus 7000 for processing configuration information of a candidate primary cell may correspond to a processor in the terminal device 110 or the original primary cell network device 120, and the instruction stored in the memory may be invoked by the processor in the terminal device 110 or the original primary cell network device 120, to implement the foregoing functions, for example, network coding and obtaining original packets. The transceiver unit 7020 may correspond to an interface in the terminal device 110 or the original primary cell network device 120, and may implement the foregoing functions of receiving and/or sending data in response to the instruction of the processor.

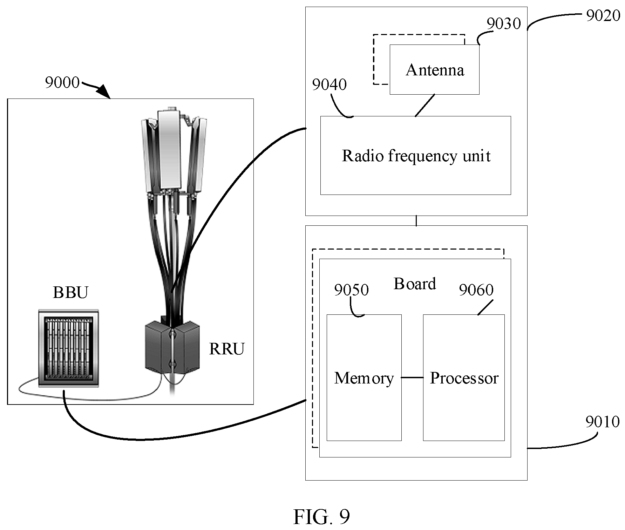

Specifically, the transceiver unit 7020 in the apparatus 7000 for processing configuration information of a candidate primary cell may be implemented through a transceiver or a communication interface, for example, may correspond to a transceiver 8020 in a terminal device 8000 shown in FIG. 8 and a remote radio unit (remote radio unit, RRU) 9020 in an original primary cell network device shown in FIG. 9. The processing unit 7010 in the apparatus 7000 for processing configuration information of a candidate primary cell may be implemented through at least one processor, for example, may correspond to a processor 8010 in the terminal device 8000 shown in FIG. 8 and a processor 9060 in the original primary cell network device shown in FIG. 9.

It should be understood that a specific process in which the units perform the foregoing corresponding steps is described in detail in the foregoing method embodiments. For brevity, details are not described herein.

FIG. 8 is a diagram of a possible structure of a terminal device 8000 according to an embodiment of this application. The terminal device 8000 may be used in the system shown in FIG. 1, to perform functions of the terminal device in the foregoing method embodiments. As shown in FIG. 8, the terminal device 8000 includes a processor 8010 and a transceiver 8020. Optionally, the terminal device 8000 further includes a memory 8030. The processor 8010, the transceiver 8020, and the memory 8030 communicate with each other through an internal connection path, to transfer a control signal and/or a data signal. The memory 8030 is configured to store a computer program. The processor 8010 is configured to invoke the computer program from the memory 8030 and run the computer program, to control the transceiver 8020 to receive or send a signal. Optionally, the terminal device 8000 may further include an antenna 8040, configured to send, by using a radio signal, uplink data or uplink control signaling output by the transceiver 8020.

The processor 8010 and the memory 8030 may combine one apparatus for processing configuration information of a candidate primary cell. The processor 8010 is configured to execute program code stored in the memory 8030 to implement the foregoing functions. During specific implementation, the memory 8030 may alternatively be integrated into the processor 8010, or may be independent of the processor 8010. The processor 8010 may correspond to the processing unit 7010 in FIG. 7.

The transceiver 8020 may correspond to the transceiver unit 7020 in FIG. 7. The transceiver 8020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 8000 shown in FIG. 8 can implement processes related to the terminal device in the method embodiments in FIG. 4 to FIG. 6A and FIG. 6B. Operations and/or functions of the modules in the terminal device 8000 are respectively intended to implement corresponding procedures in the foregoing method embodiments. For details, refer to the description in the foregoing method embodiments. To avoid repetition, detailed descriptions are appropriately omitted herein.

The processor 8010 may be configured to perform an action, implemented inside the terminal device, described in the foregoing method embodiments, and the transceiver 8020 may be configured to perform an action of sending to the original primary cell network device or receiving from the original primary cell network device, performed by the terminal device, described in the foregoing method embodiments. For details, refer to the descriptions in the foregoing method embodiments. The details are not described herein again.

Optionally, the terminal device 8000 may further include a power supply 8050, configured to supply power to various components or circuits in the terminal device.

In addition, to implement more functions of the terminal device, the terminal device 8000 may further include one or more of an input unit 8060, a display unit 8070, an audio circuit 8080, a camera 8090, a sensor 8100, and the like, and the audio circuit 8080 may further include a speaker 8110, a microphone 8120, and the like.

FIG. 9 is a diagram of a possible structure of an original primary cell network device according to an embodiment of this application, for example, may be a diagram of a structure of a base station 9000. The base station 9000 may be used in the system shown in FIG. 1, to perform functions of the original primary cell network device in the foregoing method embodiments. As shown in FIG. 9, the base station 9000 may include one or more radio frequency units (such as RRUs) 9020 and one or more baseband units (BBUs) (also referred to as distributed units (DU)) 9010. The RRU 9020 may be referred to as a transceiver unit, and corresponds to the transceiver unit 7020 in FIG. 7. Optionally, the transceiver unit may also be referred to as a transceiver, a transceiver circuit, or the like, and may include at least one antenna 9030 and a radio frequency unit 9040. Optionally, the transceiver unit may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 9020 is mainly configured to receive or send a radio frequency signal and perform conversion between a radio frequency signal and a baseband signal, for example, configured to send first indication information to a terminal device. The BBU 9010 is mainly configured to perform baseband processing, control a base station, and the like. The RRU 9020 and the BBU 9010 may be physically disposed together, or may be physically disposed separately, namely, a distributed base station.

The BBU 9010 is a control center of the base station, may also be referred to as a processing unit, and may correspond to the processing unit 7010 in FIG. 7. The BBU 9010 is mainly configured to implement a baseband processing function, for example, channel coding, multiplexing, modulation, and spreading. For example, the BBU (the processing unit) may be configured to control the base station to perform an operation procedure related to the network device in the foregoing method embodiments, for example, to generate the foregoing indication information.

In an example, the BBU 9010 may include one or more boards, and a plurality of boards may jointly support a radio access network (for example, an LTE network) of a single access standard, or may separately support radio access networks (for example, an LTE network, a 5G network, or another network) of different access standards. The BBU 9010 further includes a memory 9050 and a processor 9060. The memory 9050 is configured to store necessary instructions and data. The processor 9060 is configured to control the base station to perform a necessary action, for example, configured to control the base station to perform the operation procedure related to the network device in the foregoing method embodiments. The memory 9050 and the processor 9060 may serve one or more boards. In other words, a memory and a processor may be disposed on each board. Alternatively, the plurality of boards may share a same memory and a same processor. In addition, a necessary circuit may be further disposed on each board.

It should be understood that the base station 9000 shown in FIG. 9 can implement processes related to the original primary cell network device in the method embodiment shown in FIG. 4. Operations and/or functions of the modules in the base station 9000 are respectively intended to implement corresponding procedures in the foregoing method embodiments. For details, refer to the description in the foregoing method embodiments. To avoid repetition, detailed descriptions are appropriately omitted herein.

The BBU 9010 may be configured to perform an action, implemented inside the original primary cell network device, described in the foregoing method embodiments, and the RRU 9020 may be configured to perform an action of sending from the original primary cell network device to the terminal device or receiving from the terminal device in the foregoing method embodiments. For details, refer to the descriptions in the foregoing method embodiments. The details are not described herein again.

It should be understood that the base station 9000 shown in FIG. 9 is merely a possible architecture of the original primary cell network device, and should not constitute any limitation on this application. The method provided in this application is applicable to a network device of another architecture, for example, a network device including a CU, a DU, and an active antenna unit (active antenna unit, AAU). A specific form of the original primary cell network device is not limited in this application.

An embodiment of this application further provides an apparatus for processing configuration information of a candidate primary cell. The apparatus includes a processor and an interface. The processor is configured to perform the method in any one of the foregoing method embodiments.

It should be understood that the apparatus for processing configuration information of a candidate primary cell may be one or more chips. For example, the apparatus for processing configuration information of a candidate primary cell may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps of the foregoing method may be implemented by using a hardware-integrated logic circuit in the processor or instructions in a form of software. The steps of the method disclosed with reference to embodiments of this application may be directly performed and completed by a hardware processor, or may be performed and completed by using a combination of hardware in the processor and a software module. The software module may be stored in a storage medium that is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor. To avoid repetition, details are not described herein again.

It should be noted that the processor in this embodiment of this application may be an integrated circuit chip, and has a signal processing capability. In an implementation process, the steps in the foregoing method embodiments may be completed by a hardware-integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and the methods, steps, and logical block diagrams disclosed in the embodiments of this application may be implemented or performed. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be stored in a storage medium that is mature in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification are intended to include but not limited to these memories and any memory of another proper type.

According to the method provided in this embodiment of this application, this application further provides a computer-readable storage medium. The computer-readable storage medium stores a computer program. When the computer program is executed by a processor, the computer is enabled to perform the method in any one of the embodiments shown in FIG. 4 to FIG. 6A and FIG. 6B.

According to the method provided in embodiments of this application, this application further provides a chip system. The chip system includes at least one processor and a communication interface, the communication interface and the at least one processor are interconnected through a line, and the at least one processor is configured to run a computer program or an instruction, so that the computer performs the method in any one of the embodiments shown in FIG. 4 to FIG. 6A and FIG. 6B.

According to the method provided in embodiments of this application, this application further provides a computer program product. The computer program product includes a computer program. When the computer program is run, the computer is enabled to perform the method in any one of the embodiments shown in FIG. 4 to FIG. 6A and FIG. 6B.

The network device and the terminal device in the foregoing apparatus embodiments completely correspond to the network device or the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For functions of specific units, refer to the corresponding method embodiments. There may be one or more processors.

Terminologies such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated in figures, both a compute device and an application that runs on the compute device may be components. One or more components may reside within a process and/or a thread of execution, and a component may be located on one computer and/or distributed on two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with another system by using the signal).

A person of ordinary skill in the art may be aware that, in combination with illustrative logical blocks (illustrative logical block) described in embodiments disclosed in this specification and steps (step) may be implemented by using electronic hardware or a combination of computer software and electronic hardware. Whether the functions are executed by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, the functional units in embodiments of this application may be integrated in one processing unit, each of the units may stand alone physically, or two or more units may be integrated in one unit.

In the foregoing embodiments, functions of the functional units may be implemented in all or in part by using software, hardware, firmware, or any combination thereof. When the software is used to implement embodiments, all or some of embodiments may be implemented in a form of a computer program product. The computer program product includes one or more computer instructions (programs). When the computer program instructions (programs) are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

When functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes various media that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing configuration information of a candidate primary cell, comprising:
receiving first indication information sent by an original primary cell network device, wherein the first indication information indicates a processing policy for configuration information of a layer 1/2 triggered mobility LTM candidate primary cell when a CHO primary cell change occurs for a terminal device; and
reserving or releasing the configuration information of the LTM candidate primary cell based on the first indication information.

2. The method according to claim 1, wherein the first indication information comprises at least one of the following information:
private indication information corresponding to configuration information of each CHO candidate primary cell for releasing or reserving the configuration information of the LTM candidate primary cell;
common indication information corresponding to configuration information of at least one CHO candidate primary cell set for releasing or reserving the configuration information of the LTM candidate primary cell, wherein the configuration information of the CHO candidate primary cell set comprises configuration information of at least one CHO candidate primary cell; and
release occasion indication information, wherein the release occasion indication information indicates to release the configuration information of the LTM candidate primary cell after the CHO primary cell change is successfully completed.

3. The method according to claim 2, wherein each piece of private indication information is carried in configuration information of a corresponding CHO candidate primary cell.

4. The method according to claim 2, wherein there is a first mapping relationship between the configuration information of the first CHO candidate primary cell set and the common indication information for releasing the configuration information of the LTM candidate primary cell; and/or
there is a second mapping relationship between configuration information of a second CHO candidate primary cell set and the common indication information for reserving the configuration information of the LTM candidate primary cell.

5. The method according to claim 2, wherein the configuration information of the LTM candidate primary cell is reserved when a first condition is met, and the first condition comprises at least one of the following conditions:
first indication information corresponding to configuration information of a CHO target primary cell is the private indication information for reserving the configuration information of the LTM candidate primary cell; and
first indication information that has a mapping relationship with configuration information of a set in which the configuration information of the CHO target primary cell is located is the common indication information for reserving the configuration information of the LTM candidate primary cell.

6. The method according to claim 2, wherein if the first indication information does not comprise the release occasion indication information, the configuration information of the LTM candidate primary cell is released when a second condition is met, and the second condition comprises at least one of the following conditions:
the CHO primary cell change has been triggered and performed, and first indication information corresponding to configuration information of a CHO target primary cell is the private indication information for releasing the configuration information of the LTM candidate primary cell; and
the CHO primary cell change has been triggered and performed, and first indication information that has a mapping relationship with configuration information of a set in which the configuration information of the CHO target primary cell is located is the common indication information for releasing the configuration information of the LTM candidate primary cell.

7. The method according to claim 6, wherein if the configuration information of the LTM candidate primary cell has been released when the CHO primary cell change fails to be performed and first indication information corresponding to a CHO candidate primary cell is to reserve the configuration information of the LTM candidate primary cell when cell reselection is performed, the method further comprises:
sending second indication information to a target primary cell network device, wherein the second indication information indicates that the configuration information of the LTM candidate primary cell has been released.

8. The method according to claim 2, wherein if the first indication information comprises the release occasion indication information, the configuration information of the LTM candidate primary cell is released when a third condition is met, and the third condition comprises at least one of the following conditions:
the CHO primary cell change has been successfully performed, and first indication information corresponding to configuration information of a CHO target primary cell is the private indication information for releasing the configuration information of the LTM candidate primary cell; and
the CHO primary cell change has been successfully performed, and first indication information that has a mapping relationship with configuration information of a set in which the configuration information of the CHO target primary cell is located is the common indication information for releasing the configuration information of the LTM candidate primary cell.

9. The method according to claim 1, wherein the first indication information comprises: indication information indicating that the terminal device autonomously reserves or releases the configuration information of the LTM candidate primary cell.

10. The method according to claim 9, wherein after reserving or releasing the configuration information of the LTM candidate primary cell based on the first indication information, the method further comprises:
sending third indication information to a target primary cell network device, wherein the third indication information indicates that the terminal device has reserved or released the configuration information of the LTM candidate primary cell.

11. The method according to claim 1, wherein the first indication information further comprises: fourth indication information, and the fourth indication information indicates to reserve or release the first indication information.

12. The method according to claim 11, wherein after reserving or releasing the configuration information of the LTM candidate primary cell based on the first indication information, the method further comprises any one of the following:
if the fourth indication information indicates to reserve the first indication information, reserving the first indication information, to reserve or release, based on the first indication information, the configuration information of the LTM candidate primary cell that is reconfigured by the original primary cell network device; or
if the fourth indication information indicates to release the first indication information, releasing the first indication information, and re-receiving the first indication information sent by the original primary cell network device, to reserve or release, based on the re-received first indication information, the configuration information of the LTM candidate primary cell that is reconfigured by the original primary cell network device.

13. The method according to any one of claims 1 to 12, wherein the first indication information is carried in radio resource control RRC reconfiguration information or carried in dedicated signaling.

14. A method for processing configuration information of a candidate primary cell, comprising:
sending first indication information to a terminal device, wherein the first indication information indicates a processing policy for configuration information of an LTM candidate primary cell when a CHO primary cell change occurs for the terminal device.

15. The method according to claim 14, wherein the first indication information comprises at least:
private indication information corresponding to configuration information of each CHO candidate primary cell for releasing or reserving the configuration information of the LTM candidate primary cell;
common indication information corresponding to configuration information of at least one CHO candidate primary cell set for releasing or reserving the configuration information of the LTM candidate primary cell, wherein the configuration information of the CHO candidate primary cell set comprises configuration information of at least one CHO candidate primary cell; and
release occasion indication information, wherein the release occasion indication information indicates to release the configuration information of the LTM candidate primary cell after the CHO primary cell change is successfully completed.

16. The method according to claim 15, wherein each piece of private indication information is carried in configuration information of a corresponding CHO candidate primary cell.

17. The method according to claim 15, wherein there is a first mapping relationship between the configuration information of the first CHO candidate primary cell set and the common indication information for releasing the configuration information of the LTM candidate primary cell; and/or
there is a second mapping relationship between configuration information of a second CHO candidate primary cell set and the common indication information for reserving the configuration information of the LTM candidate primary cell.

18. The method according to claim 14, wherein the first indication information comprises: indication information indicating that the terminal device autonomously reserves or releases the configuration information of the LTM candidate primary cell.

19. The method according to claim 14, wherein the first indication information further comprises: fourth indication information, and the fourth indication information indicates to reserve or release the first indication information.

20. The method according to any one of claims 14 to 19, wherein the first indication information is carried in radio resource control RRC reconfiguration information or carried in dedicated signaling.

21. A terminal device, comprising: a processor, a memory, and a transceiver, wherein
the memory stores computer-executable instructions, and the transceiver is configured to send and receive data; and
the processor executes the computer-executable instructions stored in the memory, to enable the terminal device to perform the method according to any one of claims 1 to 13.

22. An original primary cell network device, comprising: a processor, a memory, and a transceiver, wherein
the memory stores computer-executable instructions, and the transceiver is configured to send and receive data; and
the processor executes the computer-executable instructions stored in the memory, to enable the original primary cell network device to perform the method according to any one of claims 14 to 20.

23. A computer-readable storage medium, wherein the computer-readable storage medium stores a computer program; and when the computer program is executed by a processor, the method according to any one of claims 1 to 20 is implemented.

24. A chip system, comprising at least one processor and a communication interface, wherein the communication interface and the at least one processor are interconnected through a line, and the at least one processor is configured to run a computer program or instructions, to perform the method according to any one of claims 1 to 20.

25. A computer program product, comprising a computer program, wherein when the computer program is run, a computer is enabled to perform the method according to any one of claims 1 to 20.
